(19) Europäisches Patentamt
European Patent Office
Office européen des brevets

(11) **EP 3 164 828 B1**

(12) **FASCICULE DE BREVET EUROPEEN**

(45) Date de publication et mention
de la délivrance du brevet:
**29.08.2018 Bulletin 2018/35**

(51) Int Cl.:
***B23K 26/046*** *(2014.01)*   ***B42D 25/41*** *(2014.01)*
***G06K 1/12*** *(2006.01)*   ***B23K 26/00*** *(2014.01)*

(21) Numéro de dépôt: **15733454.1**

(22) Date de dépôt: **01.07.2015**

(86) Numéro de dépôt international:
**PCT/EP2015/065045**

(87) Numéro de publication internationale:
**WO 2016/001335 (07.01.2016 Gazette 2016/01)**

(54) **PROCÉDÉ ET SYSTÈME DE MICRO-USINAGE POUR FORMER UN MOTIF SUR UN MATÉRIAU ET PROCÉDÉ D'UTILISATION D'UN TEL SYSTÈME DE MICRO-USINAGE**

MIKROBEARBEITUNGSVERFAHREN UND -SYSTEM ZUR STRUKTURIERUNG EINES MATERIALS UND VERFAHREN ZUR VERWENDUNG SOLCH EINES MIKROBEARBEITUNGSSYSTEMS

MICROMACHINING METHOD AND SYSTEM FOR PATTERNING A MATERIAL, AND METHOD FOR USING ONE SUCH MICROMACHINING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2014 FR 1456276**
**01.07.2014 FR 1456277**

(43) Date de publication de la demande:
**10.05.2017 Bulletin 2017/19**

(73) Titulaire: **Qiova**
**42000 Saint Etienne (FR)**

(72) Inventeurs:
• **LANDON, Sébastien**
**F-42100 Saint Etienne (FR)**
• **DI MAIO, Yoan**
**F-42000 Saint Etienne (FR)**
• **DUSSER, Benjamin**
**F-42110 Poncins (FR)**

(74) Mandataire: **Regimbeau**
**87 rue de Sèze**
**69477 Lyon Cedex 06 (FR)**

(56) Documents cités:
**WO-A1-01/61619     US-A1- 2011 292 157**

**Description**

DOMAINE DE L'INVENTION

La présente invention concerne le domaine du micro-usinage de matériaux, permettant notamment le marquage de ces matériaux, avec un procédé et un système de micro-usinage adapté aux cadences industrielles, permettant par exemple d'effectuer du marquage de produits pour des applications d'identification et/ou d'authentification de tels produits.

ETAT DE LA TECHNIQUE

A l'heure d'aujourd'hui et dans un contexte de marquage en forte expansion, les technologies lasers existantes ont su largement s'imposer grâce à leur capacité à usiner une grande majorité de matériaux, permettant à la fois de répondre aux problématiques industrielles actuelles tout en démontrant d'un fort potentiel de valeur ajoutée en fonction des paramètres et procédés d'exploitation. Il est cependant certains marchés où les technologies lasers arrivent à leurs limites, à savoir les productions à haute cadence, avec à titre d'exemple les secteurs de l'agro-alimentaire, du pharmaceutique, du fiduciaire ou de l'électronique, soumis de manière générale à la fabrication de produits de petites dimensions mais en très grande quantité.

La technologie de marquage la plus répandue aujourd'hui repose sur la combinaison d'une source laser de propriétés de rayonnement variées (puissance, cadence, énergie, longueur d'onde, durée d'impulsion, etc.) couplée à une tête de déflexion. Cette tête permet à la fois la focalisation du faisceau laser, c'est-à-dire la concentration spatiale de celui-ci en un point unique, ainsi que son déplacement contrôlé et automatisé dans l'espace de la pièce à marquer par analogie avec la pointe d'un stylo. La tête de déflexion est en général une tête galvanométrique composée de deux miroirs en rotation autour de deux axes orthogonaux. La motorisation de ces deux miroirs engendre une déviation angulaire du faisceau dans la direction souhaitée, par la suite convertie linéairement en une distance sur le plan de l'échantillon par une lentille de focalisation de type « f-thêta ». D'autres technologies toujours basées sur le déplacement mécanique d'optiques (miroirs, prismes, disques, polygones...) ont aussi été développés à partir de besoins spécifiques mais aussi afin d'accélérer les vitesses de marquage. Néanmoins, l'utilisation de ces systèmes sur des cadences de production élevées soulève de multiples problématiques concernant par exemple la rapidité d'exécution et stabilité des miroirs en rotation, la synchronisation des mouvements sur la cadence du faisceau laser, la correction du déplacement en fonction de la vitesse de convoyage des produits à marquer. L'ensemble de ces points limitant traités, seuls de nouveaux systèmes, soit plus rapides et donc plus onéreux, soit plus ingénieux mais toujours très spécifiques, restent à même d'éventuellement pouvoir répondre à cette demande. Le brevet d'Ichihara et al. publié sous le numéro US 5,734,145 propose par exemple un ensemble mécanique complexe associant deux miroirs galvanométriques, un miroir polygonal en rotation et un masque à cristaux liquides dans l'objectif d'accélérer l'usinage laser d'images sur lignes de production.

Il existe d'autres développements tendant à modifier le faisceau lumineux utilisé pour le marquage. On distingue tout d'abord les technologies dites par « masque d'amplitude », caractérisées par l'emploi de masques de forme identiques à la forme à usiner et présentant par conséquent deux défauts majeurs : l'unicité du masque ainsi que la perte d'énergie par blocage du faisceau dans les zones à ne pas marquer. On peut par exemple se référer aux documents brevets publiés sous les numéros US 4,128,752 et FR 2 909 922.

Les modulateurs dynamiques constituent une autre technologie de mise en forme directe de faisceau. Ce sont des éléments optiques actifs permettant de moduler spatialement le rayonnement optique laser et qui ont la capacité de réfléchir ou transmettre une grande proportion de l'énergie laser incidente au détriment d'une physique plus complexe et donc plus difficilement exploitable.

Dans les brevets US 4,734,558 et US 4,818,835 sont par exemple présentés des systèmes complets de marquage laser par mise en forme de polarisation. Les modulateurs sont adressés respectivement optiquement (masque illuminé) et électriquement à l'image de la figure à marquer. Après transmission ou réflexion sur ces derniers, les faisceaux laser de marquage se retrouvent alors modulés spatialement en deux polarisations dont l'une des deux est éliminée au passage dans un analyseur. Seule la portion d'énergie ayant la bonne polarisation est finalement transmise à la lentille de focalisation pour un marquage de la forme filtrée par relation d'imagerie. Bien que ces procédés exploitent tout deux des modulateurs dynamiques, l'emploi d'analyseurs rejoint les défauts des systèmes par masque d'amplitude avec la perte brute de l'énergie ne possédant pas la bonne polarisation.

Dans la demande de brevet US 2001/045,418, il est proposé d'utiliser des matrices de micro-miroirs afin de diviser un faisceau laser en plusieurs sous-faisceaux contrôlés indépendamment dans l'objectif d'un marquage multipoints simultané. La faible résolution des micro-miroirs engendre néanmoins une limite importante en termes de résolution et par extension en flexibilité de génération d'image. En outre, le modulateur utilisé est de type modulateur d'amplitude et l'image générée à la surface du modulateur est directement reproduite sur le matériau par relation d'imagerie, impliquant de nouveau comme inconvénient une perte d'énergie partiellement absorbée ou éjectée.

Dans la demande internationale WO 01/061619 ainsi que dans la demande de brevet US 2011/0292157, il est proposé des dispositifs de marquage qui utilisent une modulation spatiale de la lumière, configurés plus précisément pour faire de la modulation d'amplitude d'un faisceau laser afin de marquer un matériau, l'image générée à la surface du modulateur étant directement reproduite sur le matériau par relation d'imagerie. Les configurations spécifiques proposées permettent de réaliser des marquages de plusieurs points en un nombre limité de tirs laser. Ces configurations sont toutefois complexes à mettre en oeuvre, nécessitant en particulier des sources laser très spécifiques ainsi que des agencements optiques particuliers. En outre ces dispositifs souffrent également d'une perte brute d'énergie due à la modulation d'amplitude.

Dans la demande de brevet FR 2 884 743 est proposée une solution d'usinage par mise en forme de phase sur des faisceaux lasers à durée d'impulsion femtoseconde (fs). Une boucle de rétroaction entre une analyse de faisceau en aval de la mise en forme et la mise en forme elle-même permet en outre d'optimiser cette mise en forme pour des applications hautes cadences avec effets thermiques réduits sous ces régimes d'impulsion. La solution proposée dans cette demande de brevet ne reste néanmoins exploitable que pour un nombre d'industriels limité car nécessitant notamment des sources laser très spécifiques, coûteuses et imposant un montage complexe et souvent onéreux à mettre en oeuvre.

Un but de la présente invention est de proposer un procédé et un système de micro-usinage permettant de former un motif sur un matériau, à des fins de marquage d'identification et/ou d'authentification par exemple, qui peut être exploité industriellement, étant notamment simple à mettre en oeuvre, avec des dispositifs préexistants et ne nécessitant pas de réglages complexes.

En particulier, un but de la présente invention est de proposer un procédé et un système de micro-usinage afin de former un motif sur un matériau et permettant d'augmenter la productivité par rapport aux procédés et systèmes existants.

Un autre but de la présente invention est de proposer un procédé et un système de micro-usinage permettant de former un motif sur un matériau constituant un marquage à des fins d'identification et/ou d'authentification sans qu'il ne soit nécessaire de changer le paramétrage dudit procédé ou système de micro-usinage entre deux marquages successifs.

Encore un autre but de la présente invention est de proposer un procédé d'utilisation d'un système de micro-usinage permettant d'optimiser la cadence de marquages de différents produits en fonction du matériau constituant ledit produit et du système de micro-usinage en tant que tel.

EXPOSE DE L'INVENTION

Ainsi, on propose un procédé de micro-usinage selon la revendication 1. Des aspects préférés mais non limitatifs de ce procédé de micro-usinage, pris seuls ou en combinaison, sont les suivants :

- le procédé est utilisé pour former le même motif selon les mêmes paramètres de micro-usinage sur plusieurs produits identiques, où chaque motif est enregistré après avoir été formé de manière à permettre une authentification individuelle des produits.
- le train d'impulsions comprend un nombre d'impulsions au moins deux fois moins important que le nombre de points formant le motif, de préférence au moins dix fois moins important, et de préférence encore au moins cent fois moins important.
- le train d'impulsions comprend moins de mille impulsions, de préférence moins de cent impulsions, de préférence encore moins de dix impulsions, et de préférence encore le train d'impulsions comprend une seule impulsion.
- le procédé comprend en outre une étape de calcul d'une consigne de modulation à partir d'une consigne d'entrée correspondant au motif, ladite consigne de modulation étant imposée au dispositif de modulation pour effectuer la conformation dynamique du faisceau lumineux.
- l'émission du faisceau lumineux est commandée pour que chaque impulsion ait une énergie déterminée comprise entre 10 $\mu$J et 30 mJ, de préférence comprise 100 $\mu$J et 15 mJ, et de préférence encore comprise entre 1 mJ et 10 mJ.
- l'émission du faisceau lumineux est commandée pour que les impulsions du train d'impulsions aient une cadence comprise entre 10 Hz et 30 kHz, de préférence comprise entre 20 Hz et 5 kHz, et de préférence encore comprise entre 250 Hz et 1 kHz.
- l'émission du faisceau lumineux est commandée pour que le train d'impulsions délivre une puissance moyenne comprise entre 50 $\mu$W et 20 W, de préférence comprise entre 10 mW et 5 W, et de préférence encore comprise entre 20 mW et 2 W.
- l'émission du faisceau lumineux est commandée pour avoir une polarisation rectiligne avant la modulation optique dynamique.

On propose également un système de micro-usinage selon la revendication 13. Des aspects préférés mais non limitatifs de ce système de micro-usinage, pris seuls ou en combinaison, sont les suivants :

- le dispositif de focalisation comprend un plan de focalisation en configuration de Fourier par rapport au plan de modulation du dispositif de modulation.
- le système comprend en outre un ensemble d'éléments optiques agencés pour que le faisceau lumineux focalisé soit orienté à 90° par rapport au faisceau lumineux en entrée du système.
- le système a un encombrement inférieur à 200x200x250 mm$^3$, de préférence inférieur à 200x200x200 mm$^3$.

Selon un autre aspect, on propose un procédé d'utilisation selon la revendication 17. Des aspects préférés mais non limitatifs de ce procédé d'utilisation, pris seuls ou en combinaison, sont les suivants :

- si le nombre Nk maximal de points réalisables pour un train de k impulsions calculé à l'étape d) est inférieur au nombre de points formant le motif, on réitère les étapes a) à d) en choisissant un nombre d'impulsions k dudit faisceau lumineux supérieur.
- à l'étape a), on choisit un nombre d'impulsions k dudit faisceau lumineux inférieur nombre de points formant le motif.
- on paramètre la modulation de phase pour conformer le faisceau lumineux en une pluralité N de points bornée par une valeur inférieure ou égale à la moitié du nombre maximal de points $N_k$ réalisables à en un nombre k d'impulsions du faisceau lumineux.
- le procédé comprend une étape complémentaire de calcul d'un nombre de trains d'impulsions nécessaires à la formation du motif complet en divisant le nombre de points formant le motif par la pluralité N de points choisie pour le paramétrage de la modulation de phase, dans lequel le motif est un motif complexe se décomposant en plusieurs sous-motifs élémentaires pouvant être formés individuellement.
- le paramétrage du train d'impulsions consiste à choisir le nombre d'impulsions k en fonction du calcul de la densité d'énergie seuil $F_{seuil}(i)$ pour un nombre d'impulsions i quelconque, le nombre d'impulsions k étant un nombre entier choisi entre le nombre d'impulsions $k_{200}$ correspondant à une densité d'énergie seuil égale à 200% de la densité d'énergie seuil minimum, et le nombre d'impulsions $k_{100}$ correspondant au nombre d'impulsions le plus faible pour lequel la densité d'énergie est égale à la densité d'énergie seuil minimum.
- le calcul de la densité d'énergie seuil $F_{seuil}$ est effectué en considérant que le faisceau lumineux a une forme gaussienne et que le matériau irradié avec le faisceau lumineux réagit à partir d'une densité énergétique seuil $F_{seuil}$ donnée par la formule suivante :

$$F_{seuil} = F_{crête}e^{-D^2/2\omega^2} \quad avec \quad F_{crête} = \frac{2P_{moy}}{v\pi\omega^2}$$

où D est le diamètre d'impact physique du faisceau lumineux sur le matériau, $F_{crête}$ est la densité d'énergie maximale prise à l'axe optique et exprimée en fonction de la puissance moyenne laser $P_{moy}$, v est la cadence d'impulsions et $\omega$ est le rayon du faisceau lumineux dans le plan de focalisation du dispositif de focalisation.

- le calcul de la densité d'énergie seuil $F_{seuil}$ est effectué par une analyse statistique d'apparition d'endommagement du matériau.
- la mise en équation de la puissance disponible $P_{dispo}(N_k)$ en sortie du dispositif de modulation, fonction de $N_k$, se fait selon la formule suivante :

$$P_{dispo}(N_k) = P_{laser}u\%x\%(C)(cN_k + d)v\% - w\%P_{laser}$$

avec :

  ◦ u% le pourcentage de transmission du dispositif de modulation optique dynamique ;
  ◦ v% le pourcentage disponible après effet de dissymétrie du motif à marquer ;
  ◦ w% le pourcentage perdu par le faisceau lumineux au niveau d'un point de focalisation central non soumis à la conformation du dispositif de modulation optique dynamique ;
  ◦ x%(C) le pourcentage disponible après effet de l'application d'une courbure C sur une carte de phase pour une consigne de modulation appliquée au dispositif de modulation optique dynamique ;
  ◦ c et d des coefficients de nombre d'impacts traduisant la multiplicité de points de focalisation de la carte de phase utilisée pour la consigne de modulation appliquée au dispositif de modulation optique dynamique ; l'ef-

ficacité associée à $N_k$ points étant $(cN_k+d)$ où f est la distance focale du dispositif de focalisation.

- la puissance seuil $P_{seuil}(k)$ est donnée par la formule :

$$P_{seuil}(k) = \frac{v\pi\omega^2 F_{seuil}(k)}{2}$$

- le nombre maximal de points $N_k$ réalisables en un nombre k d'impulsions du faisceau lumineux est donné par la formule :

$$N_k = \frac{Z - dX}{cX - Y_k}$$

avec :

- $X = P_{laser}u\%x\%(C)v\%$ ;
- $Y_k = \dfrac{F_{seuil}(k)v\pi\omega^2}{2}$;
- $Z = w\% P_{laser}$.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- La figure 1 est une représentation en perspective du système de micro-usinage proposé.
- La figure 2 est une représentation schématique de l'ensemble des éléments intervenant sur le trajet optique du faisceau lumineux lors de l'utilisation du système de micro-usinage de la figure 1, de la génération du faisceau au marquage de l'échantillon.
- La figure 3 illustre le principe de fonctionnement d'un dispositif de modulation de phase pouvant être utilisé dans le système de micro-usinage de la figure 1.
- La figure 4 présente deux résultats de marquage laser sur matériau avec le procédé de micro-usinage proposé pour former un motif de type datamatrice (ou « datamatrix » en anglais).
- La figure 5 met en évidence l'aspect authentifiant non contrôlé maximisé par le procédé de micro-usinage proposé, selon différents points d'observation.
- La figure 6 est un graphique illustrant l'évolution du seuil de réaction d'un matériau en fonction du nombre d'impulsions par tir laser.

DESCRIPTION DETAILLEE DE L'INVENTION

La présente invention porte sur le micro-usinage de matériaux, c'est-à-dire la modification structurelle de matériaux à faible échelle par rapport aux dimensions dudit matériau. Un exemple particulier de micro-usinage est le marquage de matériau, c'est-à-dire la création de motifs spécifiques par modification structurelle du matériau.

La description qui suit est faite au regard de cet exemple particulier de micro-usinage qu'est le marquage mais l'invention associée n'est en aucun cas limitée à cet exemple particulier et porte sur l'ensemble du domaine du micro-usinage.

Le principe de base proposé consiste à modifier un faisceau lumineux permettant de faire le marquage pour créer plusieurs points de marquage focalisés en même temps sur une surface du matériau que l'on cherche à marquer.

Au lieu d'effectuer le marquage en déplaçant un unique point focalisé sur le matériau à la manière d'un stylo, on positionne ici la pluralité de points de focalisation sur la surface du matériau à marquer, permettant de réaliser un marquage à la manière d'un tampon.

On peut ainsi effectuer le marquage d'un motif en un nombre d'impulsions du faisceau lumineux qui est inférieur au nombre de points formant le motif. Cette technique a un avantage évident en milieu industriel puisque cela permet d'effectuer des marquages complexes en des temps réduits, et donc d'augmenter les cadences de production sans complexification du système de marquage.

Une telle technique de marquage permet de s'affranchir des problèmes de déplacement de faisceau et donc de synchronisation avec la source lumineuse, tout en ne sollicitant pas nécessairement de hautes cadences d'impulsion.

Dans un schéma classique de marquage avec un faisceau lumineux de type laser, on a une source laser, un ensemble d'optiques de contrôle du faisceau laser (comprenant par exemple des miroirs, lentilles, optiques de polarisation, filtres) et une optique de focalisation finale.

On prévoit ici un bloc complémentaire, appelé modulateur, permettant de moduler spatialement le faisceau lumineux en dynamique, pour en particulier contrôler la forme de ce faisceau, c'est-à-dire la répartition spatiale d'énergie optique, afin de créer plusieurs points lumineux dans le plan de focalisation de l'optique finale, correspondant au plan de marquage sur le matériau. De préférence, le bloc complémentaire permet de moduler en phase le faisceau lumineux en dynamique dans le plan dudit bloc. Le modulateur est un élément optique actif permettant de moduler spatialement le rayonnement optique laser. La modulation utilisée peut concerner l'amplitude et/ou la phase et/ou la polarisation du rayonnement, de manière indépendante ou non. De préférence, on effectuera toujours au moins une modulation de phase, pouvant éventuellement être complétée par une modulation d'amplitude ou modulation de polarisation du rayonnement. Selon des modes particuliers de marquage, une modulation de phase pure est privilégiée.

Un tel modulateur est couramment désigné par l'acronyme anglais SLM (« Spatial Light Modulator » signifiant « Modulateur Spatial de Lumière ») indépendamment de la technologie mise en oeuvre pour réaliser ladite modulation. On s'intéressera ici plus particulièrement à la sous famille des modulateurs à cristaux liquides, en transmission de type valve en ITO (selon l'acronyme anglais de « Indium Tin Oxide » signifiant « oxyde d'indium dopé à l'étain »), ou en réflexion de type LCOS (selon l'acronyme anglais de « Liquid Cristal on Silicon » signifiant « cristal liquide sur silicium »), et dont la partie optique active est une couche de cristaux liquides, généralement emprisonnée entre deux électrodes, et encore plus particulièrement à deux types de cristaux liquides : la phase nématique (pour laquelle les cristaux sont tous orientés de la même façon) et la phase nématique hélicoïdale, autrement appelée nématique twistée ou cholestérique (pour laquelle les cristaux sont organisés en hélice).

Le premier type de cristaux liquides de type nématiques permet notamment de moduler la phase seule d'une onde lumineuse polarisée rectilignement, sans modification ni sur la répartition spatiale d'énergie, ni sur l'état de polarisation.

Le second type de cristaux liquides de type cholestériques, lorsqu'exploité pour moduler un faisceau lumineux polarisé transversalement à l'axe de l'hélice, induit conjointement une modulation de la phase et une rotation de la polarisation. L'ajout d'un polariseur en sortie d'une telle couche de cristaux liquides permet de transformer la rotation de polarisation en modulation d'amplitude de l'onde qui s'ajoute donc à la modulation de phase.

Ces modulateurs sont usuellement exploités dans l'une des configurations suivante : l'une dite d'imagerie et l'autre dite de Fourier.

La configuration d'imagerie repose sur le principe de l'optique géométrique de conjugaison : le modulateur est placé dans un plan géométriquement conjugué du plan de travail, de sorte à ce que la répartition spatiale d'intensité dans le plan du modulateur soit reproduite à l'identique (à un facteur d'échelle près) dans le plan de travail (cette configuration est notamment exploitée dans le contexte de la projection d'image, le modulateur optique étant optiquement conjugué avec l'écran). Deux points importants sont à noter dans cette configuration d'imagerie :

- Le faisceau lumineux exploité et modulé n'a pas une nécessité de cohérence : l'image se formera dans le plan de travail même dans le cas de l'utilisation d'une lumière « blanche » telle qu'issue d'un LED (selon l'acronyme anglais de « Light-Emitting Diode » signifiant « diode électroluminescente ») ou d'une ampoule à incandescence.
- La modification de la phase de l'onde lumineuse dans le plan du modulateur n'aura aucune incidence dans le plan de travail. Cette configuration n'est donc pas adaptée aux modulateurs LCOS en phase nématique.

La configuration dite de Fourier, qui est préférée pour le procédé et le système de micro-usinage présentés, est une configuration dans laquelle les champs électriques exprimés dans le plan du modulateur et dans le plan de travail sont liés par une opération mathématique basée sur la Transformation de Fourier. On dit que le plan de travail est en configuration de Fourier par rapport au plan de modulation. Il n'y a donc pas de recopie à l'identique, ni de la phase, ni de l'intensité, mais le lien est connu et l'impact d'une modulation donnée est donc prédictible. Dans une configuration de Fourier, la répartition spatiale d'énergie du faisceau lumineux dans le plan du modulateur est différente de la répartition spatiale d'énergie du faisceau lumineux dans le plan de travail (plan de marquage), alors que dans une configuration d'imagerie, les répartitions spatiales d'énergie dans le plan du modulateur et dans le plan de travail sont identiques au facteur d'échelle près. Une telle configuration de Fourier existe par exemple entre le plan d'un modulateur, tel qu'un modulateur de type LCOS, et un plan de travail situé après une propagation libre de longue distance (selon le critère de Fraunhofer), ou entre les plans focaux objet et image d'une lentille mince. Notons que dans cette configuration de Fourier :

- L'utilisation d'une modulation d'amplitude et/ou de phase est pertinente. Néanmoins, le plus couramment utilisé est une modulation de phase seule pour des questions d'efficacité puisqu'une technique exploitant une configuration de modulation d'amplitude dans une configuration de Fourier présentent dans un cas général une transmission inférieure à 50% ce qui peut être problématique.

- L'objectif étant de faire interférer le faisceau avec lui-même après modulation, celle-ci ne doit pas modifier les caractéristiques du faisceau permettant cette interférence : en particulier, la polarisation ne doit pas être modifiée.

L'exploitation d'une telle configuration de Fourier nécessite l'utilisation d'un faisceau en capacité d'interférer avec lui-même dans le temps et l'espace, donc nécessairement cohérent et dans le même état de polarisation.

Selon un mode de réalisation préféré du procédé et du système de micro-usinage présentés, il est utilisé un modulateur à cristaux liquides nématiques en configuration de Fourier pour la réalisation d'une modulation de phase pure.

Le faisceau lumineux, par exemple faisceau laser, incident sur le modulateur est commandé pour permettre de faire un marquage efficace, notamment d'un point de vue industriel, tout en étant compatible avec le dispositif de modulation utilisé, notamment la résistance optique du modulateur.

Le rayonnement lumineux incident est généralement issu d'une source permettant d'émettre un faisceau lumineux pulsé, spatialement et temporellement cohérent, tel qu'un faisceau laser. On peut utiliser par exemple une source laser standard, n'ayant pas de spécificité particulière. La cohérence du faisceau lumineux pulsé est maintenue telle quelle avant que le faisceau n'atteigne le modulateur.

La longueur d'onde du rayonnement peut-être quelconque. Un domaine de préférence est établi pour la gamme des longueurs d'onde visible et proche IR (acronyme de « Infra-Rouge ») de longueur d'onde comprise dans l'intervalle [350nm-2$\mu$m]. En fonction des propriétés du matériau à marquer, on préférera une bande correspondant aux rayonnements de longueur d'onde comprise dans l'intervalle [1$\mu$m-2$\mu$m]. Toutefois, lorsque l'on souhaite augmenter l'efficacité de marquage, on préférera une bande correspondant aux rayonnements de longueur d'onde comprise dans l'intervalle [400nm-1100nm], et de préférence encore dans l'intervalle [400nm-600nm].

Le faisceau lumineux est pulsé, c'est-à-dire composé d'une succession d'impulsions. Par ailleurs, on commande l'émission pour que le faisceau soit émis sous forme de trains d'impulsions, que l'on qualifie également de tirs, où un train d'impulsions est formé d'un nombre fini d'impulsions du faisceau lumineux.

Le présent système est compatible avec les différents modes de tir existants à l'heure actuelle sans contraintes en termes de cadence des impulsions.

Ainsi, le faisceau peut être émis sous la forme d'un « tir à la demande ». Dans ce cas de figure, une succession d'impulsions est générée par un signal de déclenchement (souvent électrique et/ou TTL, acronyme anglais de « Transistor-Transistor Logic ») délivré par un élément tiers de contrôle (ordinateur, automate, etc.). Par exemple, une impulsion laser peut être générée à chaque front montant d'un signal TTL, ou à chaque pression sur un bouton.

Le faisceau peut être émis sous la forme d'un « tir continu sur base d'horloge ». Dans ce cas de figure, la source laser dispose d'un signal horloge régulier et elle délivre une série d'impulsions à la même cadence que l'horloge.

Le faisceau peut également être émis sous la forme d'un « tir déclenché sur base d'horloge », dit aussi mode « burst », qui est préféré. Dans ce cas de figure, la source laser dispose d'un signal d'horloge régulier et d'un signal de déclenchement, souvent appelé « trigger » ou « gate ». Le principe est similaire au cas continu présenté ci-dessus, à ceci près que le tir est également limité par l'état du signal de déclenchement. Par exemple, une impulsion laser n'est émise qu'en cas de front montant du signal d'horloge et d'un signal de déclenchement à l'état logique 1.

La durée des impulsions est également commandée pour être comprise entre 10 picosecondes (ps) et 100 nanosecondes (ns), de préférence comprise entre 100 picosecondes et 10 nanosecondes, et de préférence encore comprise entre 300 picosecondes et 8 nanosecondes. Par exemple, on sélectionnera une gamme de fonctionnement où la durée des impulsions est commandée pour être comprise entre 100 ps et 8 ns, avec des modes de fonctionnement privilégiés à 200 ps, 400 ps, 600 ps, 1 ns, 5 ns et 8 ns.

De telles durées d'impulsions sont particulièrement avantageuses puisqu'elles sont compatibles avec la plupart des sources lumineuses, notamment laser, qui sont largement répandues en milieu industriel. Le procédé et le système de micro-usinage proposés sont donc facilement transposables aux conditions industrielles actuelles. En outre, ces durées d'impulsions sont également compatibles avec des quantités d'énergie importantes qui peuvent être utiles pour marquer certains matériaux d'un motif comportant de nombreux points en un nombre d'impulsions très faible.

On contrôle de préférence le faisceau lumineux pour que l'énergie par impulsion et la puissance moyenne du faisceau soient suffisantes pour le marquage, en tenant notamment compte des pertes intermédiaires subies dans le système et en particulier dues au modulateur, tout en étant inférieures à des valeurs seuils au-delà desquels le modulateur pourrait être endommagé. Il est à noter que la modulation de phase permet de réduire les pertes intermédiaires au niveau du modulateur, et donc de restituer une meilleure puissance de marquage pour la même puissance en entrée et indépendamment de la forme à marquer.

Ainsi de préférence l'émission du faisceau lumineux est commandée pour que chaque impulsion ait une énergie déterminée comprise entre 10 $\mu$J et 30 mJ, de préférence comprise entre 100 $\mu$J et 15 mJ, et de préférence encore comprise entre 1 mJ et 10 mJ. Des énergies supérieures peuvent induire une destruction partielle ou totale d'une des optiques mises en oeuvre dans le système et en particulier le moyen de conformation dynamique de phase du modulateur.

De préférence encore, l'émission du faisceau lumineux est commandée pour que le train d'impulsions délivre une puissance moyenne comprise entre 50 µW et 20 W, de préférence comprise entre 10 mW et 5 W, et de préférence encore comprise entre 20 mW et 2 W. Des puissances supérieures peuvent induire une fonte partielle mais réversible des cristaux liquides constituant le moyen de conformation dynamique de phase du modulateur et donc une perte d'efficacité partielle ou totale de mise en forme dans le plan du matériau à marquer. La cadence à laquelle chaque impulsion du train d'impulsions est délivrée joue également un rôle qu'il convient de prendre en compte vis-à-vis du marquage d'une part, mais également de l'endommagement possible du modulateur. La cadence choisie est en outre fortement liées aux conditions industrielles de marquage souhaitées.

Ainsi de préférence l'émission du faisceau lumineux est commandée pour que les impulsions du train d'impulsions aient une cadence permettant d'accéder aux énergies et puissances évoquées ci-dessus, soit comprise entre 10 Hz et 30 kHz, de préférence comprise entre 20 Hz et 5 kHz, et de préférence encore comprise entre 250 Hz et 1 kHz.

De préférence, pour un marquage suffisamment structuré, on utilise une forte puissance crête. Toutefois, pour éviter de dégrader le dispositif de modulation, on privilégie une puissance moyenne modérée. Au final, l'émission du faisceau lumineux est contrôlée pour avoir une énergie par impulsions suffisante tout en ayant une cadence modérée.

Une des solutions permettant de limiter la dégradation du dispositif de modulation est de réaliser des marquages où chaque train d'impulsions nécessaire au marquage d'un motif comprend un nombre d'impulsions le plus faible possible.

En tout état de cause, le train d'impulsions comprend un nombre d'impulsions dudit faisceau lumineux strictement inférieur au nombre de points formant le motif, ce qui est particulièrement avantageux d'un point de vue industrielle pour augmenter les cadences de production sans avoir nécessairement à augmenter les cadences de fonctionnement du système de micro-usinage, notamment de la source lumineuse, ce qui va aussi dans le sens de la préservation du modulateur.

Par exemple, le train d'impulsions comprend un nombre d'impulsions au moins deux fois moins important que le nombre de points formant le motif, de préférence au moins dix fois moins important, et de préférence encore au moins cent fois moins important.

Selon un mode de réalisation privilégié, le train d'impulsions comprend moins de mille impulsions, de préférence moins de cent impulsions, de préférence encore moins de dix impulsions.

De manière optimale, le train d'impulsions comprend une unique impulsion pour former le marquage sur le matériau.

La modulation appliquée par le modulateur est calculée de sorte à obtenir in fine la forme de faisceau focalisé souhaitée.

On calcule en effet une consigne de modulation à partir d'une consigne d'entrée correspondant au motif, ladite consigne de modulation étant imposée au dispositif de modulation pour effectuer la conformation dynamique du faisceau lumineux.

Dans le cas d'un modulateur comprenant une modulation de phase, ce calcul peut par exemple être réalisé par un algorithme de calcul de carte de phase de la famille des algorithmes génétiques, ou des algorithmes itératifs à transformée de Fourier de type IFTA (correspondant à l'acronyme anglais « Iterative Fourier Transform Algorithms »), ou plus généralement par tout algorithme d'optimisation adapté à cette problématique.

Peuvent en outre être ajoutées des fonctions optiques simples telles que, de manière non exhaustive :

- un décalage transverse de l'ensemble des points (tilt ou rampe de phase) ;
- un décalage axial de l'ensemble des points (courbure de phase) ;
- des conformations de faisceau connues (axicon, vortex).

La forme cible correspondant à la forme du motif peut a priori être quelconque :

- Des formes quelconques composées d'un ensemble de points focaux (formes multipoints), par exemple dans le cadre d'applications générales de micro-usinage ;
- Des formes représentant une chaine de caractères alphanumériques sous une forme « en clair » (chiffres et lettres) ou cryptée (code à barre, code bidimensionnel - Datamatrice, QR-code, Code Aztec, etc.), par exemple dans le cadre d'applications de traçabilité.

Le chemin optique avant et après le dispositif de modulation est composé d'un ensemble d'éléments optiques tels que, de manière non exhaustive, miroirs, lentilles, systèmes afocaux, isolateurs optiques, lames d'onde, éléments séparateurs et filtres, obturateurs et éléments de sécurité.

On choisit ces éléments optiques selon l'application souhaitée, notamment le marquage envisagé, et les caractéristiques du modulateur.

Par exemple, avant la modulation, on va prévoir un ensemble d'éléments pour :

- Adapter la taille du faisceau aux divers éléments, en particulier à la surface active du modulateur.
- Adapter le niveau d'énergie et de puissance du rayonnement optique aux contraintes imposées par le modulateur.

Après modulation, on choisira par exemple un ensemble d'éléments pour :

- Adapter « virtuellement » les caractéristiques du modulateur.
- Focaliser le rayonnement laser sur la surface de la cible à marquer grâce à un dispositif de focalisation.

Le dispositif de focalisation est généralement défini industriellement par une distance focale, et un plan focal associé, donnés pour des conditions optiques spécifiques (longueur d'onde, imagerie à l'infini, indice de diffraction et courbure des dioptres). Dans cette description, on entend par plan de focalisation le plan de moindre surface d'un faisceau lumineux, c'est-à-dire le plan où l'énergie lumineuse est la plus concentrée.

Le faisceau laser étant focalisé sur la cible, la densité spatiale d'énergie, autrement appelée fluence et exprimée par exemple en $J/cm^2$, est accrue. Cette forte concentration d'énergie induit la modification du matériau cible. Cette modification peut prendre diverses formes, et notamment:

- Morphologique se traduisant par exemple par la création de microcavités, de structures ou de textures, de dépôts, ou la modification de l'état de surface.
- Chimique sous forme d'oxydation, de modification de la structure chimique par exemple.
- Physique, avec par exemple la modification des propriétés optiques (indice, réflexion, absorption), mécaniques, ou structurelles.

Les modifications d'intérêt particulier ici sont celles pouvant être mises en évidence par des outils de vision, donc ayant un impact sur le rendu visuel (au sens large et pas seulement de l'oeil humain) de la cible.

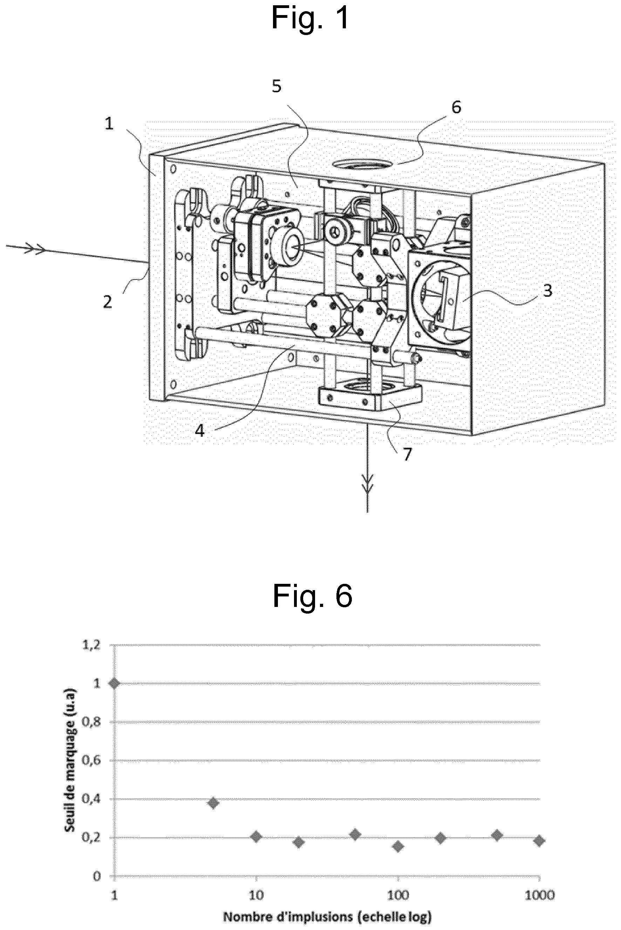

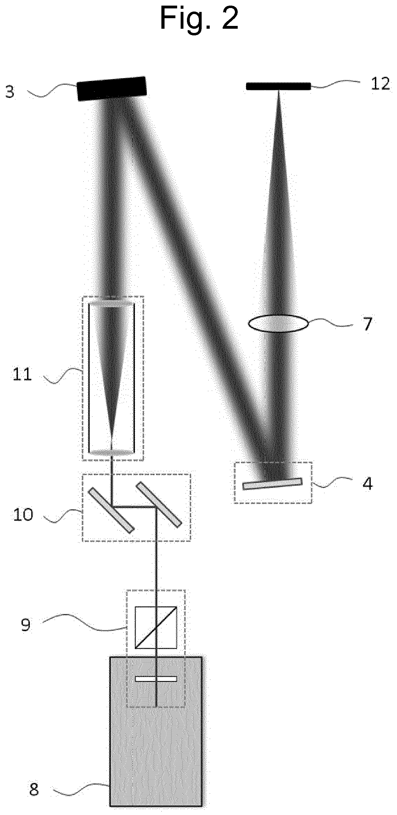

Aux figures 1 et 2 est représenté un exemple d'un système de micro-usinage permettant de marquer des matériaux, en conditions industrielles, et pouvant être utilisé dans un environnement compact et intégré.

Selon cet exemple, le système de micro-usinage - également appelé tête de marquage - est placé entre une source laser 8 - qui pourrait être une autre source lumineuse - et un matériau à marquer 12 et comprend de préférence :

- Une ouverture 2 pour un faisceau laser d'entrée avec un diamètre choisi pour maximiser le remplissage de la surface active du modulateur optique, sans qu'il soit nécessaire que le diamètre soit plus grand que la surface active. On aura par exemple un diamètre inférieur ou égal à 8 mm ;
- Un modulateur optique dynamique 3 permettant notamment la modulation spatiale de la phase de ce faisceau laser ;
- Un ensemble d'optiques de contrôle 4 de la position de ce dit faisceau, permettant par exemple la réorientation de ce dernier selon une direction perpendiculaire à la direction d'entrée conformément aux têtes de marquage laser usuelles et/ou le repliement du chemin optique pour maintenir l'ensemble du système dans un encombrement similaire ou inférieur aux têtes de marquage laser usuelles (typiquement inférieur à 200x200x250 mm$^3$, de préférence inférieur à 200x200x200 mm$^3$) ;
- Un élément de focalisation 7 permettant de concentrer l'énergie de la forme générée par le modulateur 3 sur le matériau 12 - cet élément peut être indifféremment de type lentille sphérique ou asphérique, mince, doublet ou triplet achromatique, f-thêta et/ou télécentrique. La focalisation peut par exemple être disposée perpendiculairement à la face d'entrée du système, grâce à l'ensemble des optiques citées précédemment;
- Une ouverture 6 en face opposée à la lentille de focalisation 7 pouvant accueillir ou non un moyen de visualisation de la zone de marquage ;
- Une électronique de contrôle 5, embarquée ou non, comprenant le pilotage du modulateur optique 3 et/ou de la source lumineuse et/ou la gestion d'une base de données et/ou l'interfaçage graphique pour la communication avec l'opérateur ou les autres éléments constitutifs de l'installation de marquage/micro-usinage.

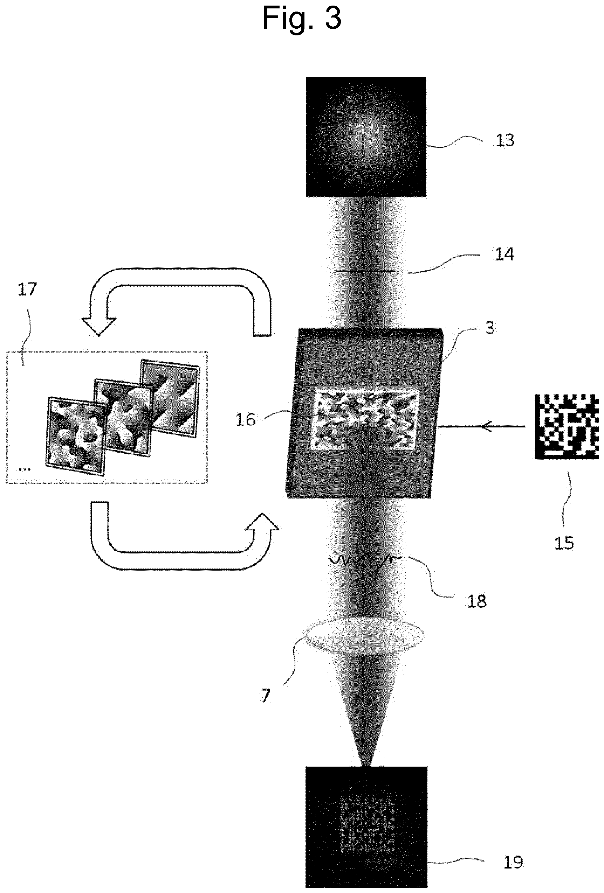

Un exemple de procédé de marquage avec un système de micro-usinage tel que proposé est décrit en référence aux figures 2 et 3.

En premier lieu, on utilise une source lumineuse, telle qu'un laser 8, pour faire le marquage. Cette source se caractérise par l'émission d'un faisceau lumineux pulsé et cohérent spatialement et temporellement.

De préférence, on commande l'émission pour que le faisceau lumineux ait une polarisation rectiligne donnée en entrée du modulateur, notamment dans le cas où l'on applique une modulation de phase. Cette polarisation peut par exemple être imposée en utilisant un polariseur et/ou une lame d'onde placée dans le chemin du faisceau lumineux.

Comme précisé plus haut, le faisceau lumineux peut avoir une longueur d'onde allant du proche infrarouge au visible selon des valeurs typiques de 350 nm à 2 μm, et de préférence de 400 nm à 1100 nm.

Comme précisé plus haut, on utilise un faisceau avec une durée d'impulsion spécifique inclue dans une gamme préférentielle comprise entre 10 ps et 100 ns, de préférence encore entre 100 ps et 8 ns.

La puissance nominale du faisceau lumineux est choisie en fonction du modulateur 3 lui-même, sensible à l'échauffement matérialisé par la puissance moyenne du laser. On utilisera par exemple une puissance nominale inférieure ou égale à 10W.

En effet, alors que la viscosité des cristaux liquides diminue avec la température les rendant plus rapides aux changements d'état, une température trop importante induit une fonte réversible de ces cristaux et la perte des effets de modulation. Le contrôle 9 de cette puissance, qu'il soit interne ou externe au laser de référence, est dès lors importante pour le bon fonctionnement du système de micro-usinage.

Il peut être associé à ce contrôle celui du nombre d'impulsions généré (généralement selon des tirs de type « burst »), également important dans le cadre d'applications à très haute cadence où la fenêtre d'optimisation du procédé en termes qualité-efficacité-rapidité peut devenir très étroite.

Comme indiqué plus haut, un ensemble d'optiques d'alignement 10 ainsi que de redimensionnement du faisceau 11, placés en amont du modulateur 3, peut s'avérer pertinent dans le cadre d'une exploitation optimale du système.

Le modulateur de phase 3 peut être de type LCOS SLM ou de type valve optique en ITO. On préfère des diamètres de faisceaux permettant de couvrir la plus grande part de la surface active 16 dudit modulateur, sans qu'il soit nécessaire que le diamètre soit plus grand que la surface active. On utilise par exemple des valeurs typiques de diamètre inférieur ou égal à 8 mm.

Cette surface active se présente sous la forme d'une matrice de cristaux liquides adressés électriquement dans le cas d'un SLM, ou adressés optiquement dans le cas de valves optiques, afin d'induire leur rotation locale et créer une différence de marche par variation de l'indice optique et exploitation de la biréfringence de ces cristaux, comme par exemple dans le cas des cristaux liquides dits « nématiques parallèles ». La propagation du faisceau laser et en particulier son front d'onde, initialement assimilé comme plan ou courbe 14, s'en retrouve alors modifié 18.

La modulation appliquée par le modulateur se présente sous la forme d'une image en niveau de gris 17 et est calculée de sorte à obtenir la forme de faisceau souhaitée 15 uniquement dans la zone de focalisation 19 par la lentille 7.

Un jeu d'optiques de positionnement 4 est de préférence de nouveau utilisé afin d'aligner le faisceau laser dans cette même lentille mais également afin de minimiser l'encombrement du système, tout en conservant les configurations nécessaires (faible incidence sur le modulateur en réflexion par exemple).

La forme cible 19 peut a priori être quelconque et changer dynamiquement 17 en fonction des ordres d'entrée 15.

La vitesse de rafraîchissement des cartes de modulation est dépendante des caractéristiques du modulateur choisi mais se situe selon des valeurs typiques entre 10 Hz et 1 kHz, par exemple de 60 Hz et inférieures.

Dans le cas d'un modulateur de phase pure 3, le calcul de la modulation à appliquer peut par exemple être réalisé par un algorithme de calcul de carte de phase de la famille des algorithmes génétiques, des algorithmes itératifs à transformée de Fourier IFTA ou tout autre algorithme adapté à cette problématique.

Ce calcul tient compte de la configuration optique mise en oeuvre, notamment sur les aspects suivants :

- Taille et forme du faisceau 13, et plus largement caractéristique du chemin optique d'entrée ;
- Caractéristiques du rayonnement (par exemple sa longueur d'onde) ;
- Caractéristiques de la lentille finale de focalisation 7 (en particulier distance focale) ;
- Conjugaison optique et distance physique du modulateur (ou son image) par cette même lentille.

Il est à noter que la distance séparant le plan du modulateur (physique ou virtuel) avant focalisation de l'optique finale (c'est-à-dire le dispositif de focalisation) doit être idéalement voisine de la distance focale de cette dernière. De manière plus générale, la distance séparant le plan du modulateur et le dispositif de focalisation est inférieure à 100 fois la distance focale du dispositif de focalisation, de préférence inférieure à 10 fois cette distance focale, et manière encore préférée inférieure à 2 fois cette distance focale.

L'algorithme de calcul, intégrable ou non dans la tête de marquage 1, génère alors une carte de phase sous forme d'une image en niveaux de gris dont chaque nuance est associée à un pourcentage de déphasage et donc de rotation des cristaux, l'amplitude de déphasage maximale étant fonction des caractéristiques du couple SLM-rayonnement mais également des choix de l'opérateur.

On peut en outre compléter la modulation initiale par des fonctions mathématiques/optiques telles qu'un décalage transverse (tilt, prisme ou rampe de phase), un décalage axial (courbure de phase), une convolution (somme des cartes de phase), etc.

La figure à marquer 15 ainsi que l'algorithme de calcul sont prédéfinis de sorte à intégrer dans le marquage final sur échantillon 12 une réalisation sous forme multipoints afin de favoriser la réaction du matériau, qu'elle soit de type morphologique (cavité, texturation, dépôt, état de surface, etc.), chimique (oxydation, etc.), physique (optique (indice de réfraction, absorption, réflexion, transmission, etc.) ou mécanique (contraintes résiduelles, etc.)).

Le nombre de points réalisables simultanément dépend de multiples conditions que sont les caractéristiques du laser (énergie, puissance, polarisation, longueur d'onde, durée d'impulsion, cadence...), du système de micro-usinage décrit (tolérance énergétique, pourcentage de transmission, force de focalisation...) mais également du matériau irradié.

De fortes énergies laser sont donc préférentiellement recommandées car réparties entre les différents points de marquage.

Connaissant les tolérances des modulateurs exploités dans le cadre de cette invention en matière de puissance moyenne, des limites en cadence d'impulsions sont également prises en considération.

Il est par exemple établi qu'un rayonnement pulsé composé d'impulsions entre 500 ps et 100 ns environ, transportant chacune 2 mJ ou moins, et émises à des cadences de 1 kHz et inférieures est particulièrement adapté.

En outre, les modes de fonctionnement suivants ont révélé une bonne capacité à générer des motifs multipoints sur de multiples matériaux aux moyens d'une impulsion unique ou d'un train de quelques impulsions (typiquement inférieur à 100 impulsions, de préférence inférieur à 10 impulsions) :

- Durée d'impulsions de 400 ps (à plus ou moins 5%), énergie de 2 mJ ou moins, et cadence de 1 kHz ou moins ;
- Durée d'impulsions de 7 ns (à plus ou moins 5%), énergie de 7 mJ ou moins, et cadence de 20 Hz ou moins ;
- Durée d'impulsions de 87 ns (à plus ou moins 5%), énergie de 100 $\mu$J ou moins, et cadence de 25 kHz ou moins ;

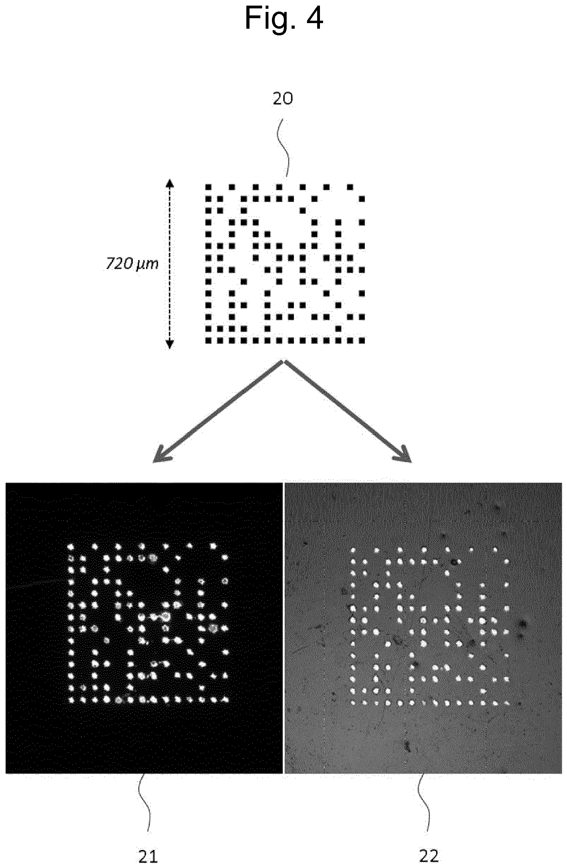

Nous allons maintenant décrire un exemple de réalisation démontrant la faisabilité de marquage de codes identifiants sur des matériaux destinés à la haute cadence grâce au système et procédé de micro-usinage décrits ci-dessus. Cet exemple est décrit en référence à la figure 4.

Le laser employé dans cet exemple répond aux caractéristiques suivantes :

- Longueur d'onde : 1064 nm ;
- Puissance de sortie : 2.2W ;
- Durée d'impulsion : 10 ns ;
- Cadence : 1 kHz ;
- Polarisation : linéaire ;
- Tirs en mode « burst » impliquant un contrôle pulse à pulse.

La configuration a été choisie de sorte à profiter de l'énergie maximale délivrable par ce système, à savoir pour une cadence minimale de 1 kHz.

Le diamètre de sortie du faisceau étant fonction de la puissance demandée, celle-ci a donc été fixée à sa valeur maximale de 2.2 W, soit une énergie disponible d'environ 2.2 mJ.

Sa variation est dès lors contrôlée de manière externe par le couple 9 lame demi-onde/cube séparateur de polarisation, permettant de plus de conserver la bonne polarisation rectiligne en entrée de la tête de marquage 1.

L'ensemble optique 11 est similaire à un télescope et est constitué de deux lentilles de focales définies de sorte à agrandir le faisceau d'un facteur 2, passant d'un diamètre de l'ordre de 4 mm en sortie laser à environ 8 mm sur le modulateur 3.

L'ensemble optique 10 est composé de miroirs disposés en aval de l'ensemble 11 dans le but d'optimiser l'entrée de faisceau 2 dans la tête de marquage 1 sans pertes.

Le modulateur de phase 3 est de type LCOS SLM de résolution 1920x1080 disposant d'une surface de 15.3x8.6 mm$^2$ (pixels carrés de 8 $\mu$m de côté /pitch).

La lentille de focalisation 7 comprend quant à elle une unique lentille mince traitée anti-reflets dans l'infrarouge de focale 100 mm.

L'ensemble de ces éléments impliquent une distance de marquage entre impacts allant de quelques microns à quelques dizaines de microns, en fonction de la résolution de la carte de phase appliquée au SLM.

L'image en entrée de commande 15 est une datamatrice de 14x14 modules dont chacun se compose d'un unique pixel 20.

L'algorithme de calcul pour la génération de la carte de phase associée 17 est de type itératif IFTA, le nombre d'itérations étant ici défini de manière quasi arbitraire, mais néanmoins supérieure à dix, de sorte à ce que l'optimisation induite par ce calcul soit notablement stabilisée et ne fluctue donc que très peu d'une itération à la suivante.

Les échantillons de matériaux marqués 21 et 22 sont de type polymères recouverts d'une métallisation de couleurs respectives argent et or de quelques micromètres d'épaisseur.

L'acquisition d'image a été obtenue au moyen d'un microscope de grandissement x40 avec éclairage en transmission.

Il a été utilisé des trains d'impulsions comprenant 25 impulsions afin d'ablater le vernis, soit 25 ms @ 1kHz pour le marquage d'une datamatrice d'environ 720 $\mu$m de côté et comportant 108 points.

Dans des conditions similaires mais avec une tête de déflexion standard type tête galvanométrique, employant toute la puissance disponible en un unique point de focalisation, le laser requis pour le marquage d'une telle datamatrice devrait fournir une cadence minimale d'environ 4 kHz pour être concurrentiel avec ce même temps de 25 ms. A cette cadence, cela suppose une unique impulsion par point de marquage et une quasi absence de temps perdu au cours des divers repositionnements mécaniques.

Comparativement à une solution classique de marquage, la technologie développée ici suppose une meilleure flexibilité dans le cadre d'applications de marquage à la volée et à haute cadence et par conséquent des temps de réalisation plus courts et davantage optimisables.

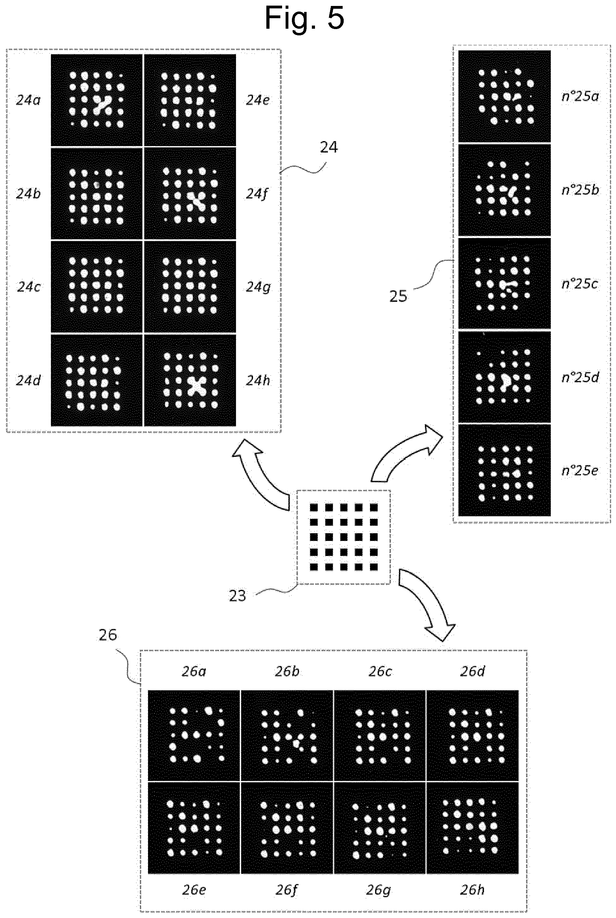

Le deuxième exemple de réalisation vise à mettre en évidence l'aspect authentifiant maximisé par le système de micro-usinage proposé au travers d'un exemple de marquage simple. Cet exemple est décrit en référence à la figure 5.

- Le laser employé dans cet exemple répond aux caractéristiques suivantes :
- Longueur d'onde : 1064 nm ;
- Puissance de sortie : 6W ;
- Durée d'impulsion : 80 ns ;
- Cadence : 25 kHz ;
- Polarisation : aléatoire ;
- Modulation de contrôle des impulsions : 5 kHz.

La configuration des divers éléments optiques est similaire au cas précédent. Néanmoins, ce laser dont les spécifications sont plus communes dispose de beaucoup plus de puissance pour une cadence d'autant plus élevée. Aussi, il n'intègre pas de contrôle pulse à pulse et une modulation externe (de type « trigger » ou « gate » telle que mentionnée précédemment) de cadence plus faible est nécessaire afin de conserver une puissance nominale de sortie constante tout en ayant suffisamment de contrôle sur le nombre d'impulsions irradiant l'échantillon.

Dès lors, pour une modulation de fréquence maximale 5 kHz à une cadence de 25 kHz, le nombre minimal d'impulsions par tir autorisé par l'ensemble est de 5.

Aussi, la polarisation de ce système est aléatoire. Le passage dans un cube polariseur assure une entrée dans la tête de marquage selon la bonne polarisation malgré une perte d'énergie de moitié. 100 $\mu$J d'énergie (soient 2,5 W de puissance moyenne à 25 kHz) parviennent finalement jusqu'au modulateur de phase 3.

L'image en entrée de commande 15 est une matrice 23 de 5x5 impacts, soit 25 points répartis uniformément et régulièrement sur une surface de 230x230 $\mu m^2$.

L'algorithme de calcul pour la génération de la carte de phase associée 17 est de nouveau de type itératif IFTA. Dans le cadre de cet exemple, le contrôle du nombre d'itérations est ici primordial.

Le matériau à marquer est de type polymère PE avec revêtement d'aluminium de plusieurs centaines de nanomètres.

La série d'images 24 de la figure 5 met en évidence plusieurs matrices de points réalisées exactement dans les mêmes configurations d'illumination et de modulation. Seul varie le positionnement sur l'échantillon.

Il peut être constaté de légères fluctuations d'un marquage à un autre (typiquement 24a et 24b), représentatives des fluctuations de propriétés des matériaux irradiés, que ce soit par mise en forme de faisceau ou par tête galvanométrique.

Les séries d'images 25 et 26 sont néanmoins spécifiques à l'utilisation de la tête de mis en forme décrite dans ce document.

La série d'images 25 met en évidence plusieurs marquages issus d'une même image source mais dont les cartes de phases sont différentes. Ce procédé non contrôlé est intrinsèque à l'algorithme utilisé qui ne converge pas vers une solution unique de carte de phase. Cette fluctuation, associée à celle de la source lumineuse incidente et des propriétés locales du matériau s'ajoute à l'unicité du marquage et donc à cet aspect authentifiant spécifique à l'interaction laser matière.

Enfin, La série d'images 26 montre l'effet du nombre d'itérations pour une même carte en cours de calcul, où les huit images 26a à 26h correspondent à des essais avec 1, 2, 3, 4, 5, 10, 20, et 50 itérations respectivement. L'écart à l'image source est d'autant plus important que le nombre d'itérations est faible du fait d'une solution de carte de phase partiellement convergée.

On peut noter l'absence de certains points de marquage 26a et l'apparition d'autres points parasites 26b mettant en évidence la capacité à créer un marquage avec une signature unique et non contrôlée.

Cet exemple de réalisation démontre clairement tout l'intérêt d'une telle innovation, en particulier sur le marché de la traçabilité et de la lutte anti-contrefaçon où les besoins en termes de vitesse de marquage et de perspectives authentifiantes sont avérés.

Ainsi, on peut former le même motif selon les mêmes paramètres de micro-usinage sur plusieurs produits identiques, où chaque motif est enregistré après avoir été formé de manière à permettre une authentification individuelle desdits produits.

Le système et le procédé de micro-usinage présentés permettent un gain de productivité important. En effet, en première approche, l'utilisation d'un faisceau laser mis en forme permet l'augmentation de la surface marquée (ou du nombre de points marqués) en un seul tir laser. Le temps nécessaire à un marquage unitaire est donc réduit d'un facteur égal au nombre de points simultanément marqués (ou au ratio des surfaces).

En outre l'utilisation de modulateurs optiques actuels permet d'envisager une modulation dynamique (changement de forme au cours du temps) avec une fréquence comprise entre 10 Hz et 1 kHz en fonction des modulateurs, par exemple voisine de 10Hz-20Hz, voire jusqu'à 60Hz. Dans le cas d'une nécessité de changement de la forme entre deux marquages (par exemple dans le cas d'une numérotation unitaire de produits), le procédé présente une cadence potentielle de 36 000 à 72 000 pièces par heure (cas de 10Hz à 20 Hz). Ces cadences sont a priori cinq à dix fois supérieures aux cadences actuelles.

En outre, le système et le procédé de micro-usinage présentés permettent de réaliser des marquages de formes complexes en peu de tirs. Les solutions actuelles étant basées sur le déplacement d'un faisceau focalisé, le motif réalisé présente intrinsèquement des bords arrondis à l'échelle de la taille de faisceau (souvent de l'ordre de la dizaine à la centaine de micromètres). L'utilisation d'un faisceau mis en forme permet d'envisager l'obtention de forme jusqu'alors très complexe à petite échelle, notamment comportant des angles droits ou vifs.

Par ailleurs, dans le contexte particulier du marquage par laser d'une information cryptée sous la forme de codes bidimensionnels, le format datamatrice est aujourd'hui préféré au format QR-code car plus rapide à marquer à contenu équivalent (puisque présentant des déplacements entre deux modules successifs moins nombreux). Or ce second type présente l'avantage d'une relecture plus aisée. L'utilisation de l'installation décrite ici permet de s'affranchir de cette limitation en présentant un temps de réalisation identique pour les deux types de codage, à contenu équivalent, du fait du marquage simultané de l'ensemble des points constituant le code, dans la limite où ce nombre de points reste inférieur au nombre maximal de points pouvant être réalisés simultanément.

Enfin, le système et le procédé de micro-usinage présentés ont un intérêt tout particulier pour ce qui concerne l'authentification de produits, dans les applications de traçabilité ou de lutte anti-contrefaçon par exemple. Ils permettent en effet de créer simplement un marquage unique. Lors de l'interaction du rayonnement lumineux avec la cible, le résultat obtenu est fortement dépendant des propriétés optiques du faisceau et physiques de la cible. En conjuguant un contrôle de la répartition spatiale de l'énergie optique, et une non-uniformité intrinsèque des propriétés locale du matériau, une variation significative du résultat de marquage peut être obtenue d'un tir sur l'autre. L'enregistrement d'une signature de ces aspects non répétables permet a posteriori l'authentification du support.

Afin d'utiliser le système et le procédé de micro-usinage présentés de façon optimisée, il est en outre proposé une méthode permettant de calculer le nombre d'impacts simultanés réalisable sur un matériau donné.

Dans cette objectif, on recense l'ensemble des paramètres d'influence pouvant jouer sur les caractéristiques de l'interaction laser-matière à l'origine de la faisabilité de marquage multipoints décrit plus haut. Ces paramètres peuvent être regroupés selon trois catégories :

- Paramètres du laser : ce sont les caractéristiques propres à la source laser, ou à la source du rayonnement lumineux de manière générale ;
- Paramètres du système et du procédé de micro-usinage : ce sont les caractéristiques propres au système de micro-usinage, son paramétrage et son fonctionnement, permettant de traiter le faisceau issu du laser jusqu'à l'échantillon ;
- Paramètres du matériau : ce sont les caractéristiques propres au matériau d'étude final, l'interaction laser-matière étant dépendante des propriétés de chaque matériau comme les propriétés d'absorption-transmission, les températures de fusion-vaporisation, etc.

Après identification de ces différents paramètres, une simulation au plus proche de la réalité de marquage sous forme multipoints peut être réalisée afin d'optimiser l'utilisation du système de micro-usinage proposé. Cette utilisation peut également se baser sur des essais réels de marquage.

Dans un premier temps, listons les paramètres qui caractérisent la source lumineuse, généralement source laser. Lorsque l'on utilise le système de micro-usinage avec un laser industriel préexistant, on retrouve souvent ces paramètres dans la documentation associée audit laser. On peut citer en particulier :

- Longueur d'onde $\lambda$
- Cadence d'impulsions $v$
- Durée d'impulsion $\tau$
- Polarisation $p$
- Puissance moyenne $P_{laser}$
- Diamètre de sortie $D_{sortie}$
- Divergence $\alpha$

Pour une exploitation maximisée de la tête de marquage proposée plus haut, la longueur d'onde λ du laser est de préférence adaptée aux différents traitements des optiques du procédé, la polarisation p est rectiligne selon une orientation définie par la tête de marquage, le diamètre de sortie du faisceau $D_{sortie}$ est adapté à la zone optique active du modulateur et la divergence du faisceau minimisée (faisceau dit collimaté). Dans ces deux derniers cas, un jeu de lentille judicieusement choisi permet à la fois d'adapter la taille du faisceau à l'entrée de la tête de marquage mais également de réduire la divergence jusqu'à obtenir un faisceau quasi-collimaté.

Dans les paramètres du système et du procédé de micro-usinage, on distingue l'ensemble des optiques permettant de réadapter les caractéristiques du faisceau en sortie laser (il a été évoqué les notions de divergence et de polarisation), les spécificités propres au marquage voulu (focale), et les propriétés de la tête de marquage par mise en forme qui a été décrite en détail plus haut.

On considère ici que le faisceau laser correspond aux données requises en entrée de la tête de marquage. Cette dernière se caractérise par :

- Pourcentage de transmission u% : le SLM étant une optique pixellisée, un pourcentage d'énergie perdue non négligeable est à considérer dans l'estimation de la quantité d'énergie disponible pour la mise en forme ; ce paramètre intègre également les imperfections des traitements des optiques composant le chemin avant et après le modulateur.
- Pourcentage disponible après effet de dissymétrie v% : il a été constaté une perte d'énergie due au motif à marquer entre une mise en forme symétrique par rapport à l'axe optique et une mise en forme non symétrique, symbolisée par une constante estimée à v% ;
- Pourcentage perdu par spot central w% : du fait de la non perfection des optiques et des propriétés laser ainsi que des approximations de calcul, un quantité d'énergie, de nouveau estimée par une constante w%, se retrouve dans un point de focalisation central, non soumis à la mise en forme appliquée sur le faisceau par le système.
- Pourcentage disponible par adjonction d'une courbure x%(C) : à l'image d'une mise en forme symétrique ou non, la réalisation d'une carte de phase comprenant une valeur de courbure influe sur la quantité d'énergie disponible pour la mise en forme. C est la valeur de courbure appliquée dans le cadre d'une mise en forme ;
- Coefficients de nombre d'impacts c & d ; pourcentage disponible fonction du nombre de points $N_k$ à marquer ($cN_k$+d) : à l'image d'une mise en forme symétrique ou non, la réalisation d'une carte de phase engendrant sur le matériau un nombre de points de focalisation différent influe sur la quantité d'énergie disponible pour la mise en forme de ce même nombre de points.
- Distance focale f : distance de travail en fonction de la lentille convergente de focalisation définie. Ce paramètre permet de définir entre autre la taille du faisceau laser au plan de marquage et donc la densité d'énergie en ce plan.

L'ensemble de ces paramètres étant caractérisés, la puissance disponible pour la mise en forme de faisceau se calcule alors par la formule suivante, fonction du nombre de points $N_k$ à marquer qui reste à définir :

$$P_{dispo} = P_{laser}u\%x\%(C)(cN_k + d)v\% - w\%P_{laser}$$

Chaque matériau ayant ses propriétés spécifiques d'absorption, il est caractérisé par des seuils en termes d'énergie et de densité d'énergie et à partir desquels celui-ci commence à réagir et à changer d'aspect. La détermination de ces seuils est importante pour valider ou non la faisabilité d'un marquage avec un laser donné.

Ces seuils dépendent également de la nature du marquage que l'on souhaite effectuer. Le seuil de marquage sera par exemple différent si l'on souhaite une visibilité à une échelle nanométrique, à une échelle microscopique ou à une échelle de l'oeil humain. Le seuil peut aussi dépendre de l'intensité du marquage désiré. En effet, comme précisé plus haut et comme décrit dans l'article de J. BONSE et al. publié le 20 juin 2001 et intitulé "Femtosecond laser ablation of silicon-modification thresholds and morphology" (APPLIED PHYSICS A, 74, 19-25 (2002), DOI 10.1007/s003390100893), il existe plusieurs niveaux de modifications des matériaux que l'on peut qualifier et auquel on peut associer un seuil de densité d'énergie.

Pour déterminer le seuil de réaction d'un matériau, plusieurs méthodes sont à disposition dans la littérature scientifique. L'article de N. SANNER et al. publié le 14 janvier 2009 et intitulé "Measurement of femtosecond laser induced damage and ablation thresholds in dielectrics" (APPLIED PHYSICS A, (2009) 94:889-897, DOI 10.1007/s00339-009-5077-6) dresse un comparatif des trois méthodes principales.

La première et la plus courante est une méthode de régression basée sur le diamètre d'impact sur un matériau marqué, plus couramment connu sous le nom de méthode de Liu, qui considère comme hypothèse la forme transverse parfaite d'un faisceau laser (forme gaussienne) de formule suivante :

$$F(r) = F_{crête}e^{\left(-2r^2/\omega^2\right)} \text{ avec } F_{crête} = \frac{2P_{moy}}{v\pi\omega^2},$$

où :

- F est la densité d'énergie (en J/cm$^2$, aussi couramment appelée fluence),
- r est la distance à l'axe optique,
- $F_{crête}$ est la fluence maximale prise à l'axe optique et exprimée en fonction de la puissance moyenne laser $P_{moy}$,
- v est la cadence d'impulsions, et
- $\omega$ est le rayon du faisceau au plan de focalisation (aussi couramment appelé « waist ») et est directement dépendant de la focale f de la lentille du système.

La méthode de Liu considère en particulier que le matériau irradié réagit à partir d'une certaine densité énergétique, $F_{seuil}$, associé de ce fait à un diamètre d'impact physique D, soit :

$$F_{seuil} = F_{crête}e^{-D^2/2\omega^2}$$

D'où après remanipulation de cette équation :

$$D^2 = 2\omega^2 \ln(F_{crête}) - 2\omega^2 \ln(F_{seuil})$$

Finalement, il apparaît que le diamètre d'impact sur le matériau usiné D croît linéairement en fonction de $\ln(F_{crête})$ et donc indirectement en fonction de la puissance. Sous hypothèse que la modélisation de l'interaction laser-matière soit linéaire (le matériau répond proportionnellement à l'énergie incidente), le seuil $F_{seuil}$ s'estime comme l'ordonnée à l'origine de cette droite.

La seconde méthode est également une méthode de régression mais cette fois-ci basée sur des observations de profondeurs ou de volumes ablatés (on parlera de taux d'ablation). En effet à intensité lumineuse croissante, davantage d'énergie va être naturellement absorbée par la matière irradiée, engendrant à terme une évolution de la morphologie d'usinage, et en particulier une profondeur d'ablation et/ou un diamètre de marquage plus important. Le recensement de ces valeurs en fonction de la fluence appliquée sur le matériau peut être modélisé, le seuil de réaction $F_{seuil}$ étant déduit de l'extrapolation obtenue à volume (ou profondeur) nul(le). A l'inverse de la méthode de Liu, la méthode par taux d'ablation analyse le résultat de marquage indépendamment de la forme de faisceau, qu'il soit gaussien ou non, tandis qu'elle requiert de nouveau une réponse linéaire du matériau vis-à-vis de l'irradiation qu'il subit.

Enfin, la troisième méthode exploite une analyse statistique d'apparition d'endommagement. Cette méthode présente l'avantage d'être visuelle, indépendante du faisceau et du matériau, et directement exploitable sans analyse complémentaire. En effet, un jeu d'impacts à paramètres identiques est répété un nombre de fois défini par l'opérateur tandis que la répétabilité du marquage est mesurée. A fluence basse, aucun des marquages ne sera visible tandis qu'à fluence élevée, l'ensemble des marquages apparaîtront. Les fluences intermédiaires entre ces 2 configurations sont définies comme des fluences seuils d'endommagement. Contrairement aux deux méthodes précédentes, celle-ci présente également l'avantage de ne pas être déterministe dans le sens où il n'existe pas une valeur de seuil fixe mais un régime transitoire propre au matériau. Avec l'application d'une telle méthode et aux vues du procédé de marquage multipoints présenté ici, la fluence seuil considérée $F_{seuil}$ sera par exemple la fluence minimale à partir de laquelle l'ensemble des impacts deviennent visibles.

Précisons ici que, dans l'hypothèse d'un profil spatial gaussien de révolution, les valeurs de fluences seuils déterminées selon l'une de ces méthodes sont également valables en énergie et en intensité par simple relation proportionnalité selon l'équation :

$$F_{seuil} = \frac{2P_{seuil}}{v\pi\omega^2}$$

On note par ailleurs que la durée d'impulsion influe sur ce seuil de marquage $F_{seuil}$ dans le sens où une durée d'impulsion plus courte diminue celui-ci. Le nombre d'impacts pouvant être simultanément réalisé va théoriquement croître à mesure que la durée d'impulsion diminue.

Les méthodes présentées ci-dessus sont généralement réalisées sur la base de tirs laser ne comportant qu'une impulsion. Le seuil ainsi défini correspond au seuil laser monopulse du matériau irradié.

De manière préférée, on transpose la méthode utilisée à des tirs laser composés de plusieurs impulsions en réitérant plusieurs fois les calculs pour plusieurs nombres d'impulsions spécifiques. Dès lors apparait sur la majeure partie des matériaux un phénomène, dit d'incubation, se caractérisant par la diminution du seuil considéré avec l'augmentation du nombre d'impulsions laser composant le tir laser.

En notant k le nombre d'impulsions comportant un tir laser, on peut donc représenter ce phénomène en remplaçant le seuil $F_{seuil}$ (respectivement $P_{seuil}$) précédent, par la fonction $F_{seuil}(k)$ (respectivement $P_{seuil}(k)$).

La figure 6 est une représentation schématique typique illustrant l'évolution du seuil ($F_{seuil}$ ou $P_{seuil}$) en fonction du nombre d'impulsions k par train d'impulsions. On voit qu'il existe un effet de saturation de l'incubation illustrée sur le graphique par l'asymptote horizontale.

La première étape de la procédure de simulation pour l'estimation du nombre de points simultanés théoriquement réalisable sur un matériau donné par un laser donné consiste à récupérer ou calculer les différents paramètres évoqués.

En second lieu et connaissant le seuil de marquage du matériau ainsi que la puissance laser disponible (fonction de $N_k$ que l'on cherche à définir) pour la mise en forme, il est fait comme hypothèse que le nombre de points mis en forme n'influe pas sur le seuil de marquage du matériau, à supposer que ces impacts soient dissociés.

Dès lors, il est estimé que la puissance disponible est équivalente à la puissance de seuil de réaction du matériau par le nombre de points théoriquement réalisable au maximum par mise en forme, et ce pour un nombre k d'impulsions par tir laser, soit :

$$P_{dispo}(N_k) \cong N_k P_{seuil}(k)$$

En appliquant cette relation à l'équation du seuil de réaction du matériau, pour un nombre k d'impulsions par train d'impulsions, on a :

$$F_{seuil}(k) = \frac{2P_{seuil}(k)}{v\pi\omega^2} \qquad \text{soit} \qquad P_{dispo}(N_k) \cong N_k \frac{v\pi\omega^2 F_{seuil}(k)}{2}$$

Finalement, en associant cette équation à celle explicitée dans la description des paramètres du système et procédé de micro-usinage, une équation à une inconnue en $N_k$ est obtenue, les autres paramètres étant connus, soit :

$$P_{laser}\, u\%\, x\%(C)(cN_k + d)v\% - w\%\, P_{laser} = \frac{F_{seuil}(k)N_k v\pi\omega^2}{2}$$

Et d'où finalement l'estimation du nombre de points $N_k$ maximal simultané par mise en forme de la tête de marquage avec un train d'impulsions comprenant k impulsions :

$$N_k = \frac{Z - dX}{cX - Y_k}$$

avec :

- $X = P_{laser}u\%x\%(C)v\%$

- $Y_k = \dfrac{F_{seuil}(k)v\pi\omega^2}{2}$

- $Z = w\% P_{laser}$

Cette procédure permet finalement au moyen des différents paramètres du système complet d'estimer de manière poussée le nombre de points maximal $N_k$ réalisables de manière simultanée par mise en forme de faisceau d'un tir laser de k impulsions, connaissant les caractéristiques de la source laser utilisée et du matériau à marquer.

On notera par extension N∞ la valeur limite de la série (qui converge a priori du fait de la saturation de l'incubation) qui représente le nombre maximum de points pouvant être inscrit simultanément dans l'absolu.

A partir de ce nombre de points maximal $N_k$ réalisables de manière simultanée par mise en forme de faisceau d'un tir laser de k impulsions, le système de micro-usinage peut être réglé en paramétrant notamment le dispositif de modulation pour conformer le faisceau lumineux en une pluralité N de points inférieure ou égale au nombre maximal de points $N_k$ réalisables pour k impulsions données.

Pour être certain que chaque point est bien marqué sur le matériau, on peut fixer ce nombre N de points de conformation strictement inférieur au nombre de points maximal $N_k$ réalisables de manière simultanée par mise en forme de faisceau d'un tir laser de k impulsions, ce qui permet d'avoir en effet une énergie disponible pour le marquage plus élevée.

Notons que la valeur maximale $N_k$ est représentative d'une valeur de seuil. A titre d'exemple, dans la configuration où un seuil d'endommagement ou de marquage est considéré, les impacts commencent à peine à marquer. Aussi il est préféré dans ce cas de fixer une borne N ayant une valeur inférieure à la valeur maximale $N_k$, par exemple $N \leq N_k/2$ ou $N \leq N_k/3$.

On peut par ailleurs en déduire le nombre de trains d'impulsions nécessaires à la formation du motif complet, notamment pour le cas des motifs très complexes, en divisant le nombre de points formant le motif par le nombre N de points de conformation choisi pour le paramétrage de la modulation de phase.

Le paramétrage du nombre k d'impulsions du train d'impulsions à utiliser pour le marquage peut être empirique, connaissant notamment les caractéristiques du matériau à marquer et les caractéristiques du dispositif d'émission et du dispositif de modulation de phase.

Il est également possible de calculer la fonction donnant la densité d'énergie seuil $F_{seuil}(i)$ pour un nombre d'impulsions i quelconque, en utilisant par exemple l'une des trois méthodes décrites plus haut, et à choisir le nombre d'impulsions k le plus adapté au marquage d'un motif composé d'un nombre de points donné.

On peut par exemple choisir le nombre d'impulsions k en fonction du calcul de la fonction donnant la densité d'énergie seuil $F_{seuil}(i)$, où le nombre d'impulsions k est un nombre entier choisi entre le nombre d'impulsions $k_{200}$ correspondant à une densité d'énergie seuil égale à 200% de la densité d'énergie seuil minimum, et le nombre d'impulsions $k_{100}$ correspondant au nombre d'impulsions le plus faible pour lequel la densité d'énergie est égale à la densité d'énergie seuil minimum.

REFERENCES BIBLIOGRAPHIQUES

- US 5,734,145
- US 4,128,752
- FR 2 909 922
- US 4,734,558
- US 4,818,835
- US 2001/045,418
- FR 2 884 743
- WO 01/061619
- US 2011/0292157
- N. SANNER et al., "Measurement of femtosecond laser induced damage and ablation thresholds in dielectrics", APPLIED PHYSICS A, (2009) 94:889-897, DOI 10.1007 /s00339-009-5077-6
- J. BONSE et al., "Femtosecond laser ablation of silicon-modification thresholds and morphology", APPLIED PHYSICS A, 74, 19-25 (2002), DOI 10.1007/s003390100893

**Revendications**

**1.** Procédé de micro-usinage pour former un motif sur un matériau, le motif étant constitué d'une pluralité de points, comprenant les étapes suivantes :

- Emission d'un faisceau lumineux pulsé spatialement et temporellement cohérent ;
- Conformation dynamique dudit faisceau lumineux pulsé spatialement et temporellement cohérent dans un plan de modulation d'un dispositif de modulation optique dynamique en appliquant au moins une modulation de phase pour conformer ledit faisceau lumineux selon la pluralité de points formant le motif ;
- Focalisation du faisceau lumineux ainsi conformé par un dispositif de focalisation sur une surface dudit matériau placé dans un plan de travail étant en configuration de Fourier par rapport au plan de modulation ;

dans lequel la formation du motif sur le matériau est réalisée avec un train d'impulsions comprenant un nombre fini d'impulsions dudit faisceau lumineux strictement inférieur au nombre de points formant le motif, et où l'émission du faisceau lumineux est commandée pour que chaque impulsion ait une durée d'impulsion déterminée comprise entre 10 ps et 100 ns.

2. Procédé selon la revendication 1, où l'émission du faisceau lumineux est commandée pour que chaque impulsion ait une durée d'impulsion déterminée comprise entre 100 ps et 10 ns.

3. Procédé selon la revendication 1, où l'émission du faisceau lumineux est commandée pour que chaque impulsion ait une durée d'impulsion déterminée comprise entre 300 ps et 8 ns.

4. Procédé selon l'une quelconque des revendications 1 à 3, dans lequel on positionne le matériau dans un plan de travail correspondant au plan de focalisation du dispositif de focalisation.

5. Procédé selon l'une quelconque des revendications 1 à 4 utilisé pour former le même motif selon les mêmes paramètres de micro-usinage sur plusieurs produits identiques, où chaque motif est enregistré après avoir été formé de manière à permettre une authentification individuelle des produits.

6. Procédé selon l'une quelconque des revendications 1 à 5, dans lequel le train d'impulsions comprend un nombre d'impulsions au moins deux fois moins important que le nombre de points formant le motif, de préférence au moins dix fois moins important, et de préférence encore au moins cent fois moins important.

7. Procédé selon l'une quelconque des revendications 1 à 6, dans lequel le train d'impulsions comprend moins de mille impulsions, de préférence moins de cent impulsions, de préférence encore moins de dix impulsions, et de préférence encore le train d'impulsions comprend une seule impulsion.

8. Procédé selon l'une quelconque des revendications 1 à 7, comprenant en outre une étape de calcul d'une consigne de modulation à partir d'une consigne d'entrée correspondant au motif, ladite consigne de modulation étant imposée au dispositif de modulation pour effectuer la conformation dynamique du faisceau lumineux.

9. Procédé selon l'une quelconque des revendications 1 à 8, dans lequel l'émission du faisceau lumineux est commandée pour que chaque impulsion ait une énergie déterminée comprise entre 10 µJ et 30 mJ, de préférence comprise 100 µJ et 15 mJ, et de préférence encore comprise entre 1 mJ et 10 mJ.

10. Procédé selon l'une quelconque des revendications 1 à 9, dans lequel l'émission du faisceau lumineux est commandée pour que les impulsions du train d'impulsions aient une cadence comprise entre 10 Hz et 30 kHz, de préférence comprise entre 20 Hz et 5 kHz, et de préférence encore comprise entre 250 Hz et 1 kHz.

11. Procédé selon l'une quelconque des revendications 1 à 10, dans lequel l'émission du faisceau lumineux est commandée pour que le train d'impulsions délivre une puissance moyenne comprise entre 50 µW et 20 W, de préférence comprise entre 10 mW et 5 W, et de préférence encore comprise entre 20 mW et 2 W.

12. Procédé selon l'une quelconque des revendications 1 à 11, dans lequel l'émission du faisceau lumineux est commandée pour avoir une polarisation rectiligne avant la modulation optique dynamique.

13. Système de micro-usinage pour former un motif constitué d'une pluralité de points sur un matériau (12) à partir d'une émission (8) d'un faisceau lumineux pulsé spatialement et temporellement cohérent, comprenant :

- Un dispositif de commande du faisceau lumineux comprenant des moyens pour limiter l'émission dudit faisceau lumineux en un train d'impulsions comprenant un nombre fini d'impulsions inférieur ou égal au nombre de points formant le motif, et des moyens pour paramétrer ledit faisceau lumineux selon une durée d'impulsion comprise entre 10 ps et 100 ns ;
- Un dispositif de modulation optique dynamique (3) comprenant des moyens pour moduler dans un plan de modulation le faisceau lumineux paramétré par le dispositif de commande selon au moins une modulation de phase à partir d'une consigne de modulation, afin de conformer ledit faisceau lumineux selon la pluralité de points formant le motif ;

- Un dispositif de pilotage prévu pour imposer la consigne de modulation au dispositif de modulation et comprenant des moyens de calcul de la consigne de modulation à partir d'une consigne d'entrée correspondant au motif ;

- Un dispositif de focalisation (7) agencé pour focaliser le faisceau lumineux conformé par le dispositif de modulation sur une surface dudit matériau positionné dans un plan de travail étant en configuration de Fourier par rapport au plan de modulation du dispositif de modulation.

**14.** Système selon la revendication 13, dans lequel le dispositif de focalisation comprend un plan de focalisation en configuration de Fourier par rapport au plan de modulation du dispositif de modulation.

**15.** Système selon l'une quelconque des revendications 13 ou 14, comprenant en outre un ensemble d'éléments optiques (4) agencés pour que le faisceau lumineux focalisé soit orienté à 90° par rapport au faisceau lumineux en entrée du système.

**16.** Système selon l'une quelconque des revendications 13 à 15 **caractérisé en ce qu'**il a un encombrement inférieur à 200x200x250 mm$^3$, de préférence inférieur à 200x200x200 mm$^3$.

**17.** Procédé d'utilisation d'un système de micro-usinage pour former un motif constitué d'une pluralité de points sur un matériau, le système comprenant un dispositif d'émission d'un faisceau lumineux pulsé spatialement et temporellement cohérent, un dispositif de modulation optique dynamique dudit faisceau lumineux comprenant une modulation de phase pour conformer ledit faisceau lumineux en une pluralité de points et un dispositif de focalisation du faisceau lumineux conformé sur une surface dudit matériau, le procédé étant **caractérisé en ce qu'**il comprend les étapes suivantes :

  a. Paramétrage d'un train d'impulsions en choisissant un nombre d'impulsions k dudit faisceau lumineux pour faire réagir le matériau ;
  b. Calcul d'une densité d'énergie seuil $F_{seuil}(k)$ à partir de laquelle le matériau réagit pour un nombre k d'impulsions dudit faisceau lumineux, et détermination d'une puissance seuil $P_{seuil}(k)$ associée ;
  c. Mise en équation d'une puissance disponible $P_{dispo}(N_k)$ en sortie du dispositif de modulation à partir de paramètres caractéristiques du dispositif d'émission et du dispositif de modulation de phase, $N_k$ étant un nombre à déterminer et représentant un nombre maximal de points réalisables pour un train de k impulsions ;
  d. Calcul du nombre maximal de points $N_k$ réalisables, en faisant l'hypothèse que le nombre de points mis en forme n'influe pas sur le seuil à partir duquel le matériau réagit, le nombre maximal de points $N_k$ réalisables étant calculé tel que :

  $\circ$ $N_k = P_{dispo}(N_k) / P_{seuil}(k)$

  e. Paramétrage de la modulation de phase pour conformer le faisceau lumineux en une pluralité N de points inférieure ou égale au nombre maximal de points $N_k$ réalisables en un nombre k d'impulsions du faisceau lumineux.

**18.** Procédé selon la revendication 17, dans lequel si le nombre $N_k$ maximal de points réalisables pour un train de k impulsions calculé à l'étape d) est inférieur au nombre de points formant le motif, on réitère les étapes a) à d) en choisissant un nombre d'impulsions k dudit faisceau lumineux supérieur.

**19.** Procédé selon l'une quelconque des revendications 17 ou 18, dans lequel à l'étape a), on choisit un nombre d'impulsions k dudit faisceau lumineux inférieur nombre de points formant le motif.

**20.** Procédé selon l'une quelconque des revendications 17 à 19, dans lequel on paramètre la modulation de phase pour conformer le faisceau lumineux en une pluralité N de points bornée par une valeur inférieure ou égale à la moitié du nombre maximal de points $N_k$ réalisables en un nombre k d'impulsions du faisceau lumineux.

**21.** Procédé selon l'une quelconque des revendications 17 à 20, comprenant une étape complémentaire de calcul d'un nombre de trains d'impulsions nécessaires à la formation du motif complet en divisant le nombre de points formant le motif par la pluralité N de points choisie pour le paramétrage de la modulation de phase, dans lequel le motif est un motif complexe se décomposant en plusieurs sous-motifs élémentaires pouvant être formés individuellement.

**22.** Procédé selon l'une quelconque des revendications 17 à 21, dans lequel le paramétrage du train d'impulsions consiste à choisir le nombre d'impulsions k en fonction du calcul de la densité d'énergie seuil $F_{seuil}(i)$ pour un nombre d'impulsions i quelconque, le nombre d'impulsions k étant un nombre entier choisi entre le nombre d'impulsions $k_{200}$ correspondant à une densité d'énergie seuil égale à 200% de la densité d'énergie seuil minimum, et le nombre d'impulsions $k_{100}$ correspondant au nombre d'impulsions le plus faible pour lequel la densité d'énergie est égale à la densité d'énergie seuil minimum.

23. Procédé selon l'une quelconque des revendications 17 à 22, dans lequel le calcul de la densité d'énergie seuil $F_{seuil}$ est effectué en considérant que le faisceau lumineux a une forme gaussienne et que le matériau irradié avec le faisceau lumineux réagit à partir d'une densité énergétique seuil $F_{seuil}$ donnée par la formule suivante :

$$F_{seuil} = F_{crête}e^{-D^2/2\omega^2} \quad \text{avec} \quad F_{crête} = \frac{2P_{moy}}{v\pi\omega^2}$$

où D est le diamètre d'impact physique du faisceau lumineux sur le matériau, $F_{crête}$ est la densité d'énergie maximale prise à l'axe optique et exprimée en fonction de la puissance moyenne laser $P_{moy}$, v est la cadence d'impulsions et $\omega$ est le rayon du faisceau lumineux dans le plan de focalisation du dispositif de focalisation.

24. Procédé selon l'une quelconque des revendications 17 à 22, dans lequel le calcul de la densité d'énergie seuil $F_{seuil}$ est effectué par une analyse statistique d'apparition d'endommagement du matériau.

25. Procédé selon l'une quelconque des revendications 17 à 24, dans lequel la mise en équation de la puissance disponible $P_{dispo}(N_k)$ en sortie du dispositif de modulation, fonction de $N_k$, se fait selon la formule suivante :

$$P_{dispo}(N_k) = P_{laser}u\%x\%(C)(cN_k + d)v\% - w\%P_{laser}$$

avec :

- u% le pourcentage de transmission du dispositif de modulation optique dynamique ;
- v% le pourcentage disponible après effet de dissymétrie du motif à marquer ;
- w% le pourcentage perdu par le faisceau lumineux au niveau d'un point de focalisation central non soumis à la conformation du dispositif de modulation optique dynamique ;
- x%(C) le pourcentage disponible après effet de l'application d'une courbure C sur une carte de phase pour une consigne de modulation appliquée au dispositif de modulation optique dynamique ;
- c et d des coefficients de nombre d'impacts traduisant la multiplicité de points de focalisation de la carte de phase utilisée pour la consigne de modulation appliquée au dispositif de modulation optique dynamique ; l'efficacité associée à $N_k$ points étant $(cN_k+d)$ où f est la distance focale du dispositif de focalisation.

26. Procédé selon l'une quelconque des revendications 17 à 25, dans lequel la puissance seuil $P_{seuil}(k)$ est donnée par la formule :

$$P_{seuil}(k) = \frac{v\pi\omega^2 F_{seuil}(k)}{2}$$

27. Procédé selon l'une quelconque des revendications 17 à 26, dans lequel le nombre maximal de points $N_k$ réalisables en un nombre k d'impulsions du faisceau lumineux est donné par la formule :

$$N_k = \frac{Z - dX}{cX - Y_k}$$

avec:

- X = P$_{laser}$u%x%(C)v% ;

$$Y_k = \frac{F_{seuil}(k)v\pi\omega^2}{2};$$

- Z = w% P$_{laser}$

## Patentansprüche

**1.** Verfahren zur Mikrobearbeitung zum Bilden eines Musters auf einem Material, wobei das Muster aus einer Mehrzahl von Punkten besteht, das die folgenden Schritte umfasst:

- Emission eines räumlich und zeitlich kohärenten gepulsten Lichtstrahls;
- Dynamische Formgebung des räumlich und zeitlich kohärenten gepulsten Lichtstrahls in einer Modulationsebene einer dynamischen optischen Modulationsvorrichtung durch Anwendung mindestens einer Phasenmodulation zur Formgebung des Lichtstrahls gemäß der Mehrzahl der das Muster bildenden Punkte;
- Fokussierung des so gebildeten Lichtstrahls durch eine Fokussiervorrichtung auf eine Oberfläche des Materials, das auf einer Arbeitsplatte in Fourier-Konfiguration relativ zur Modulationsebene platziert ist;

wobei die Musterbildung auf dem Material mit einer Impulsfolge durchgeführt wird, die eine endliche Anzahl von Impulsen des Lichtstrahls umfasst, die streng kleiner ist als die Anzahl der das Muster bildenden Punkte, und wobei die Emission des Lichtstrahls so gesteuert wird, dass jeder Impuls eine bestimmte Impulsdauer zwischen 10 ps und 100 ns hat.

**2.** Verfahren nach Anspruch 1, wobei die Emission des Lichtstrahls so gesteuert wird, dass jeder Impuls eine bestimmte Impulsdauer zwischen 100 ps und 10 ns hat.

**3.** Verfahren nach Anspruch 1, wobei die Emission des Lichtstrahls so gesteuert wird, dass jeder Impuls eine bestimmte Impulsdauer zwischen 300 ps und 8 ns hat.

**4.** Verfahren nach einem der Ansprüche 1 bis 3, wobei das Material auf einer Arbeitsplatte positioniert wird, die der Fokussierebene der Fokussiervorrichtung entspricht.

**5.** Verfahren nach einem der Ansprüche 1 bis 4, das verwendet wird, um das gleiche Muster gemäß den gleichen Mikrobearbeitungsparametern auf mehreren identischen Produkten zu bilden, wobei jedes Muster nach seiner Bildung aufgezeichnet wird, um eine individuelle Authentifizierung der Produkte zu ermöglichen.

**6.** Verfahren nach einem der Ansprüche 1 bis 5, wobei die Impulsfolge mindestens halb so viele Impulse umfasst wie die Anzahl der das Muster bildenden Punkte, vorzugsweise mindestens zehnmal weniger und vorzugsweise mindestens hundertmal weniger.

**7.** Verfahren nach einem der Ansprüche 1 bis 6, wobei die Impulsfolge weniger als tausend Impulse, vorzugsweise weniger als hundert Impulse, vorzugsweise sogar weniger als zehn Impulse, und die Impulsfolge weiter vorzugsweise nur einen Impuls umfasst.

**8.** Verfahren nach einem der Ansprüche 1 bis 7, das ferner einen Schritt der Berechnung eines Modulationssollwerts aus einem Eingangssollwert umfasst, der dem Muster entspricht, wobei der Modulationssollwert der Modulationsvorrichtung auferlegt wird, um eine dynamische Formgebung des Lichtstrahls zu bewirken.

**9.** Verfahren nach einem der Ansprüche 1 bis 8, wobei die Emission des Lichtstrahls so gesteuert wird, dass jeder Impuls eine bestimmte Energie zwischen 10 µJ und 30 mJ, vorzugsweise zwischen 100 µJ und 15 mJ, und weiter vorzugsweise zwischen 1 mJ und 10 mJ aufweist.

**10.** Verfahren nach einem der Ansprüche 1 bis 9, wobei die Emission des Lichtstrahls so gesteuert wird, dass die Impulse der Impulsfolge eine Frequenz zwischen 10 Hz und 30 kHz, vorzugsweise zwischen 20 Hz und 5 kHz, und weiter vorzugsweise zwischen 250 Hz und 1 kHz aufweisen.

**11.** Verfahren nach einem der Ansprüche 1 bis 10, wobei die Emission des Lichtstrahls so gesteuert wird, dass die Impulsfolge eine mittlere Leistung zwischen 50 μW und 20 W, vorzugsweise zwischen 10 mW und 5 W, und weiter vorzugsweise zwischen 20 mW und 2 W liefert.

12. Verfahren nach einem der Ansprüche 1 bis 11, wobei die Emission des Lichtstrahls vor der dynamischen optischen Modulation auf eine gerade Polarisation gesteuert wird.

13. Mikrobearbeitungssystem zum Bilden eines Musters, das aus einer Mehrzahl von Punkten auf einem Material (12) besteht, aus einer räumlich und zeitlich kohärenten gepulsten Lichtstrahlemission (8), das Folgendes umfasst:

- Lichtstrahlsteuervorrichtung, die Mittel zur Begrenzung der Emission des Lichtstrahls in eine Impulsfolge mit einer endlichen Anzahl von Impulsen umfasst, die kleiner oder gleich der Anzahl der das Muster bildenden Punkte ist, und Mittel zur Einstellung des Lichtstrahls auf eine Impulsdauer zwischen 10 ps und 100 ns;
- Dynamische optische Modulationsvorrichtung (3), die Mittel zum Modulieren des von der Steuervorrichtung parametrierten Lichtstrahls in einer Modulationsebene gemäß zumindest einer Phasenmodulation aus einem Modulationssollwert umfasst, zur Formgebung des Lichtstrahls gemäß der Mehrzahl der das Muster bildenden Punkte;
- Steuervorrichtung, die geeignet ist, den Modulationssollwert der Modulationsvorrichtung aufzuerlegen, und die Mittel zum Berechnen des Modulationssollwerts aus einem dem Muster entsprechenden Eingangssollwert umfasst;
- Fokussiervorrichtung (7), die zum Fokussieren des von der Modulationsvorrichtung geformten Lichtstrahls auf eine Oberfläche des Materials gestaltet ist, die in einer Arbeitsplatte in Fourier-Konfiguration relativ zur Modulationsebene der Modulationsvorrichtung angeordnet ist.

14. System nach Anspruch 13, wobei die Fokussiervorrichtung eine Fokussierebene in Fourier-Konfiguration relativ zur Modulationsebene der Modulationsvorrichtung umfasst.

15. System nach einem der Ansprüche 13 oder 14, das ferner eine Gruppe von optischen Elementen (4) umfasst, die so angeordnet sind, dass der fokussierte Lichtstrahl um 90° relativ zum Lichtstrahl am Eingang des Systems ausgerichtet ist.

16. System nach einem der Ansprüche 13 bis 15, **dadurch gekennzeichnet, dass** es einen Platzbedarf von weniger als 200x200x250 mm$^3$, vorzugsweise weniger als 200x200x200 mm$^3$ aufweist.

17. Verfahren zur Verwendung eines Mikrobearbeitungssystems zur Bildung eines Musters, das aus einer Mehrzahl von Punkten auf einem Material besteht, wobei das System eine Übertragungsvorrichtung eines räumlich und zeitlich kohärenten gepulsten Lichtstrahls umfasst, eine dynamische optische Modulationsvorrichtung des Lichtstrahls mit Phasenmodulation zur Formgebung des Lichtstrahls an eine Mehrzahl von Punkten und eine Fokussiervorrichtung des geformten Lichtstrahls auf eine Oberfläche des Materials, wobei das Verfahren **dadurch gekennzeichnet ist, dass** es die folgenden Schritte umfasst:

a. Parametereinstellung einer Impulsfolge durch Auswahl einer Anzahl von Impulsen k des Lichtstrahls, damit das Material reagiert;
b. Berechnung einer Schwellenenergiedichte $F_{Schwelle}$ (k) aus der das Material für eine Anzahl k von Impulsen des Lichtstrahls reagiert, und Bestimmung einer zugehörigen Schwellenleistung $P_{Schwelle}(k)$ ;
c. Gleichung einer verfügbaren Leistung $P_{verfügbar}(N_k)$ am Ausgang der Modulationsvorrichtung aus charakteristischen Parametern der Übertragungsvorrichtung und der Phasenmodulationsvorrichtung, wobei $N_k$ eine zu bestimmende Zahl ist und eine maximale Anzahl von erreichbaren Punkten für eine Folge von k Impulsen darstellt;
d. Berechnung der maximalen Anzahl der erreichbaren $N_k$ unter der Annahme, dass die Anzahl der geformten Punkte die Schwelle, ab der das Material reagiert, nicht beeinflusst, wobei die maximale Anzahl der erreichbaren Punkte $N_k$ berechnet werden als:

$$\circ\ N_k = P_{verfügbar}(N_k)/P_{Schwelle}(k)$$

e. Parameterbestimmung der Phasenmodulation zur Formgebung des Lichtstrahls an eine Mehrzahl von N Punkten kleiner oder gleich der maximalen Anzahl von $N_k$ Punkten, die in einer Anzahl k von Impulsen des Lichtstrahls erreichbar ist.

**18.** Verfahren nach Anspruch 17, wobei, wenn die maximale Anzahl $N_k$ von Punkten, die für eine in Schritt d) berechnete Impulsfolge k erreichbar ist, kleiner als die Anzahl von Punkten ist, die das Muster bilden, die Schritte a) bis d) durch Auswahl einer Anzahl von Impulsen k des höheren Lichtstrahls wiederholt werden.

**19.** Verfahren nach einem der Ansprüche 17 oder 18, wobei in Schritt a) eine Anzahl von Impulsen k des Lichtstrahls mit kleiner Anzahl von Punkten ausgewählt wird, die das Muster bilden.

**20.** Verfahren nach einem der Ansprüche 17 bis 19, wobei die Parameter der Phasenmodulation bestimmt werden, zur Formgebung des Lichtstrahls an eine Mehrzahl von N Punkten, die durch einen Wert begrenzt ist, der kleiner oder gleich der Hälfte der maximalen Anzahl von $N_k$ Punkten ist, die in einer Anzahl k von Impulsen des Lichtstrahls erreichbar ist.

**21.** Verfahren nach einem der Ansprüche 17 bis 20, das einen zusätzlichen Schritt zum Berechnen einer Anzahl von Impulsfolgen umfasst, die zur Bildung des vollständigen Musters erforderlich sind, indem die Anzahl der das Muster bildenden Punkte durch die Mehrzahl N von Punkten geteilt wird, die zur Parametereinstellung der Phasenmodulation ausgewählt werden, wobei das Muster ein komplexes Muster ist, das in eine Vielzahl von elementaren Untermustern aufgeteilt, die einzeln gebildet werden können.

**22.** Verfahren nach einem der Ansprüche 17 bis 21, wobei die Parameterbestimmung der Impulsfolge darin besteht, die Anzahl der Impulse k in Abhängigkeit von der Berechnung der Schwellenenergiedichte $F_{Schwelle}$ (i) für eine beliebige Anzahl von Impulsen i auszuwählen, wobei die Anzahl der Impulse k eine ganze Zahl ist, die zwischen der Anzahl der Impulse $k_{200}$ gewählt wird, die einer Schwellenenergiedichte gleich 200 % der minimalen Schwellenenergiedichte entspricht, und der Anzahl der Impulse $k_{100}$, die der niedrigsten Anzahl der Impulse entspricht, bei denen die Energiedichte gleich der minimalen Schwellenenergiedichte ist.

**23.** Verfahren nach einem der Ansprüche 17 bis 22, wobei die Berechnung der Schwellenenergiedichte $F_{Schwelle}$ unter Berücksichtigung der Tatsache durchgeführt wird, dass der Lichtstrahl eine Gaußsche Form hat und dass das mit dem Lichtstrahl bestrahlte Material aus einer Schwellenenergiedichte $F_{Schwelle}$ reagiert, die in folgender Formel angegeben wird:

$$F_{Schwelle} = F_{Spitz}\, e^{-D^2/2\omega^2} \text{ mit } F_{Spitz} = \frac{2P_{mitt}}{v\pi\omega^2}$$

wobei D der physikalische Auftreffdurchmesser des Lichtstrahls auf das Material ist, $F_{Spitz}$ die maximale Energiedichte aus der optischen Achse, ausgedrückt in Abhängigkeit von der mittleren Laserleistung $P_{mitt}$ ist, v die Pulsfrequenz ist und $\omega$ der Radius des Lichtstrahls in der Fokussierebene der Fokussiereinrichtung ist.

**24.** Verfahren nach einem der Ansprüche 17 bis 22, wobei die Berechnung der Schwellenenergiedichte $F_{Schwelle}$ durch eine statistische Analyse des Auftretens von Schäden am Material durchgeführt wird.

**25.** Verfahren nach einem der Ansprüche 17 bis 24, wobei die Gleichung der verfügbaren Leistung $P_{verfügbar}(N_k)$ am Ausgang der Modulationsvorrichtung in Abhängigkeit von $N_k$ gemäß der folgenden Formel erfolgt:

$$P_{verfügbar}(N_k) = P_{Laser}\, u\% x\%(C)(cN_k + d)v\% - w\% P_{Laser}$$

mit:

- u% der Übertragungsprozentsatz der dynamischen optischen Modulationsvorrichtung;
- v% der verfügbare Prozentsatz nach dem asymmetrischen Effekt des zu markierenden Musters;
- w% der prozentuale Verlust des Lichtstrahls an einem zentralen Fokussierpunkt, der nicht der Formgebung der dynamischen optischen Modulationsvorrichtung unterliegt;
- x% (C) der Prozentsatz, der nach der Anwendung einer Krümmung C auf eine Phasenplatine für einen Modulationssollwert verfügbar ist, der an die dynamische optische Modulationsvorrichtung angewendet wird;
- c und d Auswirkungskoeffizienten, die die Vielzahl der Fokussierpunkte der Phasenplatine widerspiegeln, die für den Modulationssollwert verwendet wird, der auf die dynamische optische Modulationsvorrichtung angewendet wird; wobei der mit $N_k$ Punkten verbundene Wirkungsgrad ($cN_k$+d) ist, wobei f die Brennweite der Fokussiervorrichtung ist.

26. Verfahren nach einem der Ansprüche 17 bis 25, wobei die Schwellenleistung $P_{Schwelle}$(k) durch folgende Formel gegeben ist:

$$P_{Schwelle}(k) = \frac{v\pi\omega^2 F_{Schwelle}(k)}{2}$$

27. Verfahren nach einem der Ansprüche 17 bis 26, wobei die maximale Anzahl von Punkten $N_k$, die in einer Anzahl k von Impulsen des Lichtstrahls erreichbar ist, wie in der Formel gegeben ist:

$$N_k = \frac{Z - dX}{cX - Y_k}$$

mit:

- $X = P_{Laser}u\%x\%(C)v\%$
- $Y_k = \frac{F_{Schwelle}(k)v\pi\omega^2}{2}$
- $Z = w\%P_{Laser}$

**Claims**

1. A micromachining method for forming a pattern on a material, the pattern consisting of a plurality of points, comprising the following steps:

   - Emission of a spatially pulsed and time coherent light beam;
   - Dynamic shaping of said spatially and temporally coherent pulsed light beam, in a modulation plane of a dynamic optical modulation device, by applying at least one phase modulation to shape said light beam according to the plurality of points forming the pattern;
   - Focusing of such a shaped light beam by means of a focusing device onto a surface of said material positioned in a work plane being in a Fourier configuration with respect to the modulation plane;

   wherein forming the pattern on the material is carried out with a pulse train containing a finite number of pulses of said light beam that is strictly less than the number of points forming the pattern, and wherein the emission of the light beam is controlled so that each pulse has a determined pulse duration comprised between 10 ps and 100 ns.

2. The method according to claim 1, wherein the emission of the light beam is controlled so that each pulse has a determined pulse duration comprised between 100 ps and 10 ns.

3. The method according to claim 1, wherein the emission of the light beam is controlled so that each pulse has a determined pulse duration comprised between 300 ps and 8 ns.

4. The method according to any one of claims 1 to 3, wherein the material is positioned within a working plane corresponding to the focusing plane of the focusing device.

5. The method according to any one of claims 1 to 4 used to form the same pattern, according to the same micromachining parameters on a plurality of identical products, wherein every pattern is recorded after having been formed for the individual authentication of the products.

6. The method according to any one of claims 1 to 5, wherein the pulse train comprises a number of pulses at least two times less than the number of points forming the pattern, preferably at least ten times less, and more preferably at least one hundred times less.

7. The method according to any one of claims 1 to 6, wherein the pulse train comprises less than one thousand pulses, preferably less than one hundred pulses, more preferably less than ten pulses, and more preferably the pulse train comprises only one pulse.

8. The method according to any one of claims 1 to 7, further comprising a step of calculating a modulation set-point value from an input set-point value corresponding to the pattern, said modulation set-point value being imposed on the modulation device for carrying out the dynamic shaping of the light beam.

9. The method according to any one of claims 1 to 8, wherein the light beam emission is controlled for each pulse so as to have a determined energy comprised between 10 $\mu$J and 30 mJ, preferably comprised between 100 $\mu$J and 15 mJ, and more preferably comprised between 1 mJ and 10 mJ.

10. The method according to any one of claims 1 to 9, wherein the light beam emission is controlled so that the pulses of the pulse train have a repetition rate comprised between 10 Hz and 30 kHz, preferably comprised between 20 Hz and 5 kHz, and more preferably comprised between 250 Hz and 1 kHz.

11. The method according to any one of claims 1 to 10, wherein the light beam emission is controlled so that the pulse train delivers an average power comprised between 50 $\mu$W and 20 W, preferably comprised between 10 mW and 5W, and more preferably comprised between 20 mW and 2 W.

12. The method according to any one of claims 1 to 11, wherein the light beam emission is controlled so as to have a rectilinear polarization before the dynamic optical modulation.

13. A micromachining system for forming a pattern consisting of a plurality of points on a material (12), from an emission (8) of a spatially and temporally coherent pulsed light beam, comprising:

- A control device for the light beam, comprising means of limiting the emission of said light beam to a pulse train comprising a finite number of pulses less than or equal to the number of points forming the pattern, and means of setting said light beam according to a pulse duration comprised between 10 ps and 100 ns;
- A dynamic optical modulation device (3) comprising means of modulating in a modulation plane the light beam set by the control device according to at least one phase modulation from a modulation set-point value, so as to shape said light beam according to the plurality of points forming the pattern;
- A control device provided to impose the modulation set-point value to the modulation device and comprising means of calculating the modulation set-point value from an input set-point value corresponding to the pattern;
- A focusing device (7) arranged for focusing the light beam shaped by the modulation device onto a surface of said material positioned in a working plane being in a Fourier configuration with respect to the modulation plane of the modulation device.

14. The system according to claim 13, wherein the focusing device comprises a focusing plane being in a Fourier configuration with respect to the modulation plane of the modulation device.

15. The system according to any one of claims 13 or 14, further comprising a set of optical elements (4) arranged for the focused light beam to be oriented at 90° with respect to the light beam at the system input.

16. The system according to any one of claims 13 to 15, **characterized in that** the system has a bulk volume of less than 200x200x250mm$^3$, preferably of less than 200x200x200mm$^3$.

17. A method for using a micromachining system for forming a pattern consisting of a plurality of points on a material, the system comprising a device for emitting a spatially and temporally coherent pulsed light beam, a dynamic optical modulation device of said light beam comprising a phase modulation for shaping said light beam into a plurality of points and a focusing device of the shaped light beam onto a surface of said material, the method being **characterized in that** it comprises the following steps:

a. Setting a pulse train by choosing the number of pulses k of said light beam to make the material react;
b. Calculating a threshold density $F_{threshold}(k)$ from which the material reacts for a number k of pulses of said light beam, and determining an associated threshold power $P_{threshold}(k)$;
c. Setting an equation for an available power $P_{avail}(N_k)$ at the output of the modulation device from characteristic parameters of the emission device and of the phase modulation device, $N_k$ being a number to be determined and representing a maximum number of points that can be marked for a train of k pulses;

d. Calculating the maximum number of points $N_k$ that can be marked, under the hypothesis that the number of shaped points has no influence on the threshold from which the material reacts, the maximum number of points $N_k$ that can be marked being calculated so that:

○ $N_k = P_{avail} (N_k)/ P_{threshold}(k)$

e. Setting the phase modulation to shape the light beam in a plurality of N points less than or equal to the maximum number of points $N_k$ that can be marked with a number k of pulses of the light beam.

18. The method according to claim 17, wherein if the maximum number $N_k$ of points that can be marked for a train of k pulses calculated at step d) is less than the number of points forming the pattern, steps a) to d) are repeated in choosing a larger number of pulses k for said light beam.

19. The method according to any one of claims 17 or 18, wherein at step a), a number of pulses k of said light beam is chosen, less than the number of points forming the pattern.

20. The method according to any one of claims 17 to 19, wherein the phase modulation is set to shape the light beam in a plurality of N points limited by a value less than or equal to half of the maximum number of points $N_k$ that can be marked within a number k of pulses of the light beam.

21. The method according to any one of claims 17 to 20, comprising a supplementary calculation step for the number of pulse trains required to form a full pattern by dividing the number of points forming the pattern by the plurality of N points chosen for setting the phase modulation, wherein the pattern is a complex pattern decomposing into a plurality of elementary sub-patterns that can be individually formed.

22. The method according to any one of claims 17 to 21, wherein setting the pulse train consists in choosing the number of pulses k according to the calculation of the threshold energy density $F_{threshold}(i)$ for any number of pulses i, the number of pulses k being an integer chosen between the number of pulses $k_{200}$ corresponding to a threshold energy density equal to 200% of the minimum threshold energy density, and the number of pulses $k_{100}$ corresponding to the lowest number of pulses for which the energy density is equal to the minimum threshold energy density.

23. The method according to any one of claims 17 to 22, wherein the calculation of the threshold energy density $F_{threshold}$ is carried out considering that the light beam has a Gaussian shape and that the material irradiated with the light beam reacts from a threshold energy density $F_{threshold}$ given by the following formula:

$$F_{threshold} = F_{peak} e^{-D^2/2\omega^2} \quad \text{with} \quad F_{peak} = \frac{2P_{av}}{v\pi\omega^2}$$

where D is the physical impact diameter of the light beam on the material, $F_{peak}$ is the maximum energy density measured at the optical axis and expressed as a function of the laser average power $P_{av}$, v is the pulse repetition rate and $\omega$ is the radius of the light beam in the focusing plane of the focusing device.

24. The method according to any one of claims 17 to 22, wherein the calculation of the threshold energy density $F_{threshold}$ is carried out by a statistical analysis of occurrence of damage to the material.

25. The method according to any one of claims 17 to 24, wherein the equation giving the available power $P_{avail}(N_k)$ at the output of the modulation device, as a function of $N_k$, is the following formula:

$$\overline{P_{avail}}(N_k) = P_{laser} u\% x\% (C)(cN_k + d)v\% - w\% P_{laser}$$

with:

- u% the transmission percentage of the dynamic optical modulation device;
- v% the available percentage after the effect of lack of symmetry of the pattern to mark;

- w% the percentage lost by the light beam at the central focusing point not subject to shaping from the dynamic optical modulation device;
- x%(C) the available percentage after the effect of the application of a curvature C on a phase map for a modulation set-point value applied to the dynamic optical modulation device;
- c and d are coefficients for the number of impacts, reflecting the multiplicity of the focusing points of the phase map used for the set-point value applied to the dynamic optical modulation device; the efficiency associated with $N_k$ points is ($cN_k$+d), where f is the focal length of the focusing device.

**26.** The method according to any one of claims 17 to 25, wherein the threshold power $P_{threshold}$(k) is given by the formula:

$$P_{threshold}(k) = \frac{v\pi\omega^2 F_{threshold}(k)}{2}$$

**27.** The method according to any one of claims 17 to 26, wherein the maximum number of points $N_k$ that can be marked within a number k of pulses of the light beam, is given by the formula:

$$N_k = \frac{Z - dX}{cX - Y_k}$$

with:

- $X = P_{laser}$u%x%(C)v% ;

- $Y_k = \dfrac{F_{threshold}(k)v\pi\omega^2}{2}$;

- $Z = w\% \, P_{laser}$

# Fig. 1

# Fig. 6

# Fig. 2

# Fig. 3

# Fig. 4

20

720 μm

21

22

# Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5734145 A
- US 4128752 A
- FR 2909922
- US 4734558 A
- US 4818835 A

- US 2001045418 A
- WO 01061619 A
- US 20110292157 A
- FR 2884743

**Littérature non-brevet citée dans la description**

- **J. BONSE et al.** Femtosecond laser ablation of silicon-modification thresholds and morphology. *APPLIED PHYSICS A,* 20 Juin 2001, vol. 74, 19-25
- **N. SANNER et al.** Measurement of femtosecond laser induced damage and ablation thresholds in dielectrics. *APPLIED PHYSICS A,* 14 Janvier 2009, vol. 94, 889-897

- **N. SANNER et al.** Measurement of femtosecond laser induced damage and ablation thresholds in dielectrics. *APPLIED PHYSICS A,* 2009, vol. 94, 889-897
- **J. BONSE et al.** Femtosecond laser ablation of silicon-modification thresholds and morphology. *APPLIED PHYSICS A,* 2002, vol. 74, 19-25